# EUROPÄISCHE PATENTSCHRIFT

(11) **EP 0 657 083 B1**
(45) Veröffentlichungstag und Bekanntmachung des Hinweises auf die Patenterteilung: **03.07.1996**
(21) Anmeldenummer: 93919170.6
(22) Anmeldetag: 25.08.1993
(51) Int. Cl.: H04Q 3/545

(54) **KOORDINIERUNGSSYSTEM ZUR KOORDINIERUNG VON VERBINDUNGSANFORDERUNGEN**
SYSTEM FOR COORDINATING CONNECTION REQUESTS
SYSTEME DE COORDINATION DE DEMANDES DE CONNEXION

(30) Priorität: 25.08.1992 EP 92114474
(43) Veröffentlichungstag der Anmeldung: 14.06.1995
(73) Patentinhaber: SIEMENS AKTIENGESELLSCHAFT, D-80333 München (DE); GPT LIMITED, Coventry, CV3 1HJ (GB)
(72) Erfinder: WILLE-FIER, Regina, D-82041 Deisenhofen (DE); CUTLER, John, Wayne, Coventry CV3 1FX (GB)
(86) Internationale Anmeldenummer: EP9302288
(87) Internationale Veröffentlichungsnummer: WO9405122

(56) Entgegenhaltungen:
- EP-A- 0 466 948
- NACHRICHTEN TECHNIK ELEKTRONIK Bd. 35, Nr. 10 , 1985 , BERLIN DE Seiten 365 - 370 H.-J. SCHWERTFEGER 'Prozess-Prozessor-Zuordnung in Multiprozessorsystemen mit globalen und lokalen Speicherressourcen zur Steuerung von Vermittlungsprozessen'
- EUROPEAN TRANSACTIONS ON TELECOMMUNICATIONS AND RELATED TECHNOLOGIES Bd. 2, Nr. 4 , August 1991 , MILANO IT Seiten 391 - 401 G. P. BALBONI ET AL. 'An ATM Switching Testbed'
- PROCEEDINGS OF THE NATIONAL COMMUNICATIONS FORUM Bd. 45 , Oktober 1991 , OAK BROOK, ILLINOIS US Seiten 185 - 193 S. CANNON 'Switch Architecture for the Intelligent Network'

## Beschreibung

Bei der Entwicklung von zukünftigen Vermittlungssystemen ist man bestrebt, möglichst modulare Software-Systeme zur Steuerung des Vermittlungssystems zu entwerfen. Dies geschieht vor allem im Hinblick auf eine bessere Entkopplung der einzelnen Funktionen eines Vermittlungssystems und damit einer einfacheren späteren Veränderbarkeit bzw. besseren Wiederverwendbarkeit der Vermittlungssoftware bei Weiterentwicklungen.

Aus dem Artikel "Prozeß-Prozessor-Zuordnung in Multiprozessorsystemen mit globalen und lokalen Speicherresourcen zur Steuerung von Vermittlungsprozessen" von H.-J.Schwertfeger in der Zeitschrift Nachrichtentechnik Elektronik, Bd. 35, Nr. 10, 1985, Berlin, Seiten 365 - 370 sind unter anderem allgemeine Betrachtungen über die Möglichkeit der Prioritätszuordnung zu Prozessen bekannt.

Aus dem Artikel "An ATM-Switching Test" von G.P. Balbony et.al. in dem Dokument European Transactions on Telecommunications and related Technologies, Band 2, Nr. 4, August 1991, Milano, Seiten 391-401 ist ein allgemeines Software-Modell für einen ATM-Switch-Knoten bekannt.

Bei modularen Connection-Systemen zur Steuerung von Verbindungen auf logischer Ebene ist es für die Verbesserung der Modularisierbarkeit sehr förderlich, wenn die Module eines solchen Connection-Systems in der Lage sind, eigenständige Verbindungsanforderungen an ein Switching-Control-System zur Steuerung der Verbindungen auf physikalischer Ebene zu stellen. Durch dieses eigenständige Erzeugen von Verbindungsanforderungen ergeben sich allerdings Probleme der Koordinierung der Verbindungssteuerung.

Der Erfindung liegt das Problem zugrunde, ein Koordinierungssystem anzugeben, durch das eine Koordinierung der eigenständigen Verbindungsanforderungen eines Connection-Systems zur Steuerung von Verbindungen auf logischer Ebene gegenüber einem Switching-Control-System zur Steuerung von Verbindungen auf physikalischer Ebene erreicht wird.

Dieses Problem wird durch die Merkmale des Anspruchs 1 gelöst.

Durch das erfindungsgemäße Koordinierungssystem wird erreicht, daß von den durch das Connection-System erzeugten Verbindungsanforderungen zu einem bestimmten Zeitpunkt immer nur eine Verbindungsanforderung an das Ressourcen-Control-System gestellt werden kann. Dadurch wird eine logisch sinnvolle Folge von Verbindungsanforderungen an das Ressourcen-Control-System gewährleistet.

Gemäß Anspruch 3 wird eine Verbindung in mehrere Verbindungsseiten geteilt, wobei eine Verbindungsseite und damit die zugehörigen Koordinierungsmodule durch einen aktiven Verbindungsendpunkt und wenigstens ein zentrales Koordinierungsmodul abgegrenzt werden. Dadurch wird es ermöglicht, daß Verbindungsanforderungen für einen einzelnen aktiven Verbindungsendpunkt nur innerhalb einer Verbindungsseite, d.h. unter den Koordinierungsmoduln einer einzigen Verbindungsseite koordiniert werden müssen. Da das zentrale Koordinierungsmodul die geringste Prioriät besitzt, kann es die Kontrolle über die zugehörigen zwei Verbindungsseiten erst dann erlangen, wenn sämtliche Koordinierungsmoduln auf diesen beiden Verbindungsseiten ihrerseits die Kontrolle freigegeben haben. Dadurch wird erreicht, daß solche Verbindungsanforderungen, auf deren Veranlassung zwei an der Verbindung beteiligte aktive Verbindungsendpunkte verbunden werden sollen, und die somit am Ende eines Verbindungssteuerungsvorganges stehen, vom zentralen Koordinierungsmodul erst dann durchgesetzt werden können, wenn sämtliche vorbereitenden Steuerungsvorgänge abgeschlossen sind. Ein vorzeitiges Durchsetzen einer solchen Verbindungsanforderung wird dadurch vermieden.

Gemäß Anspruch 4 wird erreicht, daß ein Koordinierungsmodul eine Verbindungsanforderung auch für einen solchen Verbindungsendpunkt durchsetzen kann, über den es selbst keine Kontrolle erlangen kann.

Die Ausführungsformen der Erfindung gemäß Anspruch 5 und Anspruch 6 haben insbesondere den Vorteil, daß dadurch der dynamische Aufwand für die verbindungsbezogene Kommunikation verringert wird.

Eine Ausführungsform der Erfindung gemäß Anspruch 7 hat insbesondere den Vorteil, daß dadurch die Entkopplung des Connectionsystems vom Switching-Control-System verbessert wird.

Im folgenden wird die Erfindung anhand der Zeichnung näher erläutert.

FIG 1 zeigt die Struktur eines ATM-Vermittlungssystems.

FIG 2 zeigt die modulare Zusammensetzung des Call-Processing-Systems.

FIG 3 zeigt die Sichtweise der Segmente des Connectionsystems und der Koordinierungsmodule des Koordinierungssystems bezüglich einer Verbindung.

FIG 4 bis 8 zeigen den Ablauf eines standortmäßigen Verbindungsaufbaus.

FIG 9 und 10 zeigen den Ablauf bei Anlegen eines Tons an einen stabilen Call.

FIG 11 bis 15 zeigen den Ablauf zum Aufbau eines 3-WegeCalls bei Vorliegen eines stabilen 2-Wege-Calls.

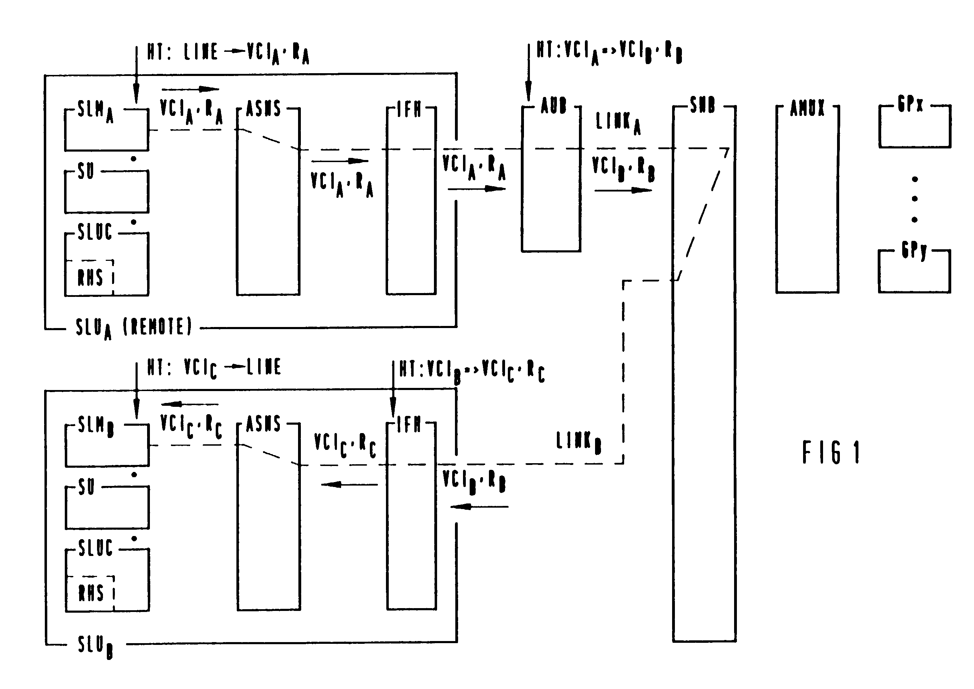

FIG 1 zeigt die Struktur eines ATM-Vermittlungssystems, bei dem die erfindungsgemäße Software-Struktur zur Realisierung der Vermittlungsschicht eingesetzt werden kann.

Die prinzipiellen Switching-Funktionen zum Aufbau von STM- oder ATM-Verbindungen sind vergleichbar. So wird beispielsweise auch für eine ATM-Verbindung ein virtueller Pfad durch die betroffenen Koppeleinrichtungen bestimmt bevor der tatsächliche Datentransfer beginnt. Alle Zellen einer ATM-Verbindung werden über diesen Pfad übertragen. Im allgemeinen werden sich mehrere Verbindungen einen ATM-Link teilen. ATM-Zellen, die zur selben Verbindung gehören, wird dieselbe VCI/VPI-Kennung (virtual connection/path identifier) im Zellenheader zugeordnet.

Ein ausgewählter Pfad muß für alle Links, die eine Verkehrskonzentration bewirken, in Software-Verzeichnissen reserviert werden, um eine Überlast auf den ATM-Links zu verhindern.

Die Anzahl der Zellen, die in einem bestimmten Zeitintervall übertragen werden, definiert die Bandbreite, die durch eine bestimmte ATM-Verbindung auf einem Link beansprucht wird. Die zugeordnete Bandbreite wird durch eine Benutzer/ Netz-Schnittstelle verbindungsindividuell überwacht, um ein nicht autorisiertes Uberfluten der Koppeleinrichtungen durch einen bestimmten Anwender (policing) zu verhindern. Das genannte Software-Verzeichnis wird durch ein Software-Ressourcensystem RHS verwaltet, das in einer Steuereinheit SLUC einer Teilnehmereinheit SLU inplementiert ist.

Die VCI/VPI-Kennung, die einer bestimmten ATM-Verbindung zugeordnet ist und die in FIG 1 mit der Bezeichnung VCI abgekürzt ist, ist immer für einen bestimmten Link gültig. Bevor die ATM-Zellen auf einem anderen Link weiterübertragen werden, wird im Header einer ATM-Zelle eine neue VCI/VPI-Kennung eingetragen (Header-Ubersetzung HT). Diese Header-Übersetzung findet ebenfalls an der nicht dargestellten Benutzer/Netz-Schnittstelle statt.

Die Header-Ubersetzung wird außerdem jeweils vor dem Durchlauf einer Koppeleinrichtung durchgeführt. In diesem Fall wird einer ATM-Zelle gleichzeitig mit dem Eintragen einer neuen VCI/VPI-Kennung eine Routing- Kennung R angefügt, die den festgelegten Pfad durch die folgende Koppeleinrichtung beschreibt. Die Routing-Kennung R wird innerhalb der folgenden Koppeleinrichtung ausgewertet, um die Zelle zu dem richtigen abgehenden Link durchzusteuern. Für einen virtuellen Pfad wird in der Schnittstellenschaltung IFH bzw. in der Zugangseinrichtung AU (bei einer entfernten SLU) nur die VPI-Kennung neu berechnet, während die VCI-Kennung, die einzelnen Verbindungen zugeordnet ist, unverändert bleibt. Alle Zellen mit derselben VPI-Kennung erhalten somit dieselben Routing-Kennungen, wodurch es ermöglicht wird, mehrere virtuelle Verbindungen auf transparente Weise über denselben virtuellen Pfad zu schalten.

In FIG 1 ist die Header-Ubersetzung für eine virtuelle ATM-Verbindung über die Hauptkoppeleinrichtung SNB gezeigt. Als virtuelle ATM-Verbindung ist eine Einweg-Verbindung vom einer Teilnehmeranschlußeinheit SLU_{A} zu einer Teilnehmeranschlußeinheit SLU_{B} dargestellt. Im folgenden werden die für eine ATM-Zelle durchgeführten Header-Übersetzungen näher beschrieben.

Die erste Header-Übersetzung HT wird durch das Teilnehmermodul SLM_{A} durchgeführt. In diesem Teilnehmermodul werden die Routing-Kennungen R_{A} für den Pfad durch das lokale Koppelnetz ASNS der Teilnehmereinheit SLU_{A} den ATM-Zellen zugefügt und die VCI_{A}-Kennung wird in den Header der ATM-Zellen eingetragen.

Die zweite Header-Übersetzung für die zentrale Koppeleinrichtung SNB wird durch die Breitbandzugangseinrichtung AUB bewirkt. In dieser Breitbandzugangseinrichtung erhalten alle ankommenden Zellen mit der Pfadkennung VCI_{A} eine neue Pfadkennung VCI_{B} und eine neue Routing-Kennung R_{B} für den Pfad durch die Hauptkoppeleinrichtung SNB.

Die dritte und letzte Header-Übersetzung wird in der Teilnehmereinheit SLU_{B} der B-Seite in der IFH durchgeführt. Dort erhalten alle ankommenden Zellen mit der Pfadkennung VCI_{B} eine neue Pfadkennung VPI_{C}, sowie neue Routing-Kennungen R_{C} für den Pfad durch die lokale Koppeleinrichtung ASNS der Teilnehmereinheit SLU_{B}.

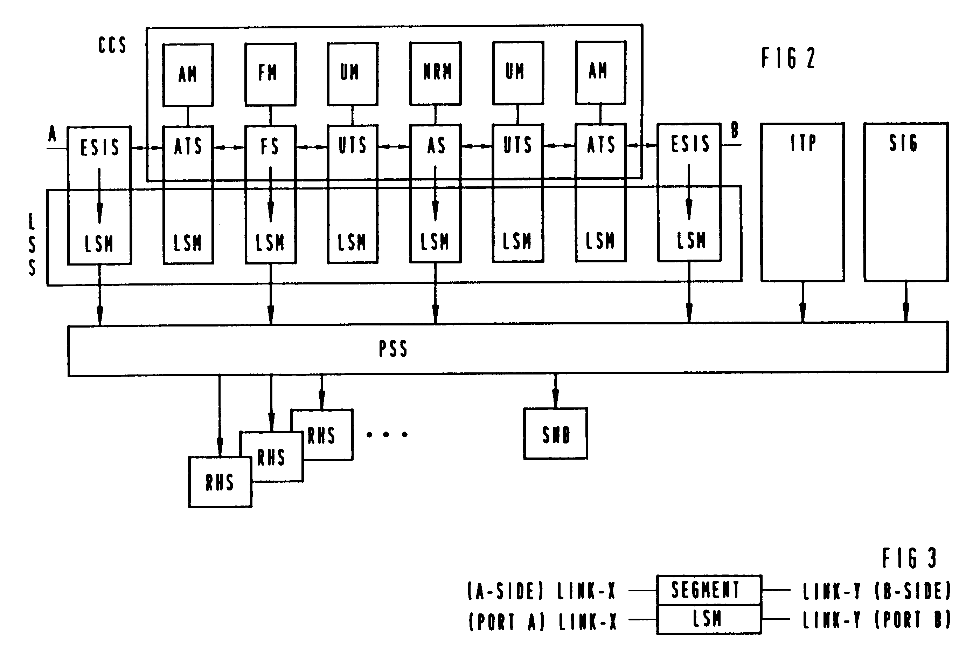

FIG 2 zeigt die modulare Zusammensetzung eines speziellen Anwendersystems, nämlich des Call-Processing-Systems zur Steuerung von Nutzverbindungen (Calls) sowie dessen Einordnung bezüglich weiterer Software-Systeme zur Steuerung von Verbindungen (Connections) innerhalb eines Vermittlungssystems.

Das Call-Processing-System umfaßt ein Call-Control-System CCS zur Steuerung einer Verbindung auf logischer Ebene, ein ESIS zur Abschirmung des Call-Control-Systems von verschiedenen Signalisierungsvarianten und ein Koordinierungssystem LSS zur Koordinierung der von dem Call Control-System erzeugten logischen Verbindungsanforderungen gegenüber einem Switching-Control-System PSS. Das Schnittstellensystem ESIS und das Call-Control-System kann zusammengefaßt als ein spezielles Connection-System, nämlich ein Call-Connection-System betrachtet bzw. bezeichnet werden. Das Switching-Control-System kann als die zentrale Steuerung eines Ressourcen-Control-Systems betrachtet werden.

Auf der gleichen Ebene wie das Call-Processing-System sind des weiteren ein Processing-System ITP (Systemadministration) und ein Processing-System SIG (Signalisierungsadministration) zur Steuerung von Signalisierungsverbindungen eines Signalisierungssystems dargestellt.Diese Processing-Systeme enthalten ebenfalls, wie das Call-Processing-System, Connection-Systeme, die sich an das Switching-Control-System PSS, wenden, um ihre logischen Verbindungswünsche auf physikalischer Ebene zu realisieren.

FIG 2 zeigt des weiteren den dezentralen Teil des Resourcen-Control-Systems, nämlich Ressourcen-Systeme RHS zur lokalen Steuerung der Ressourcen des Vermittlungssystems und die Hauptkoppeleinrichtung SNB, die als einzige Ressource des Vermittlungssystems direkt vom Switching-Control-System gesteuert wird.

Im folgenden wird das Call-Processing-System beschrieben.

Das ESIS bewirkt die Abschirmung des Call-Control-Systems CCS von verschiedenen Signalisierungsvarianten, indem es die verschiedenen Signalisierungsschemata in eine allgemeine Nachrichtenschnittstelle zwischen ESIS und CCS umwandelt. Die interne Struktur des ESIS ist streng modular mit separaten Softwaremodeln für jedes unterstützte Signalisierungssystem bzw. jede Variante davon. Durch diese Softwaremoduln werden im Zusammenhang mit Verbindungen entsprechende Instanzen erzeugt oder entfernt, je nachdem, welche verbindungsspezifischen Signalisierungsanforderungen auftreten. Das Call-Control-System CCS sieht jedoch trotz der unterschiedlichen Softwaremoduln immer eine allgemeine Nachrichtenschnittstelle zum ESIS.

Das ESIS ist außerdem zuständig für den verbindungsbezogenen Signalisierungsaustausch zwischen verschiedenen Signalisierungssystemen.

Das Call-Control-System CCS dient der Steuerung der Verbindung auf logischer Ebene. Seine Aufgaben beinhalten die Verkehrslenkung, den standardmäßigen Verbindungsauf- bzw. -abbau, Behandlung von Leistungsmerkmalen, Benachrichtigen des Gebührensystems und des Statistiksystems über Call-Events, usw. Das Aufgabengebiet des CCS schließt die Steuerung des physikalischen Verbindungsauf- bzw. -abbau nicht ein. Dieser wird zwar durch das CCS initialisiert, jedoch durch das Switching-Control-System PSS selbständig gesteuert. Im folgenden werden nur die Aufgaben des CCS bezüglich der Verbindungssteuerung näher betrachtet.

Das CCS umfaßt zwei Typen von Software-Einheiten, nämlich statische Moduln (Manager) und transiente Moduln, die als Call-Segmente bezeichnet werden. Die genannten Call-Segmente erzeugen pro Verbindung eine Reihe von Instanzen (Prozeß- oder Dateninstanzen), die untereinander über eine gemeinsame Nachrichtenschnittstelle kommunizieren. Im folgenden werden die genannten Instanzen auch als Segmente bezeichnet und die kommunizierende Reihe von Instanzen auch als Call-Kette.

Unter den Call-Segmenten gibt es Access-Segmente ATS, die die technischen Merkmale des betreffenden Ports repräsentieren, Anwender-Segmente UTS, die die Leistungsmerkmale des Anwenders repräsentieren, Verknüpfungs-Segmente AS (Associater Segments) die die Verknüpfung der A- und B-Seite repräsentieren und Feature-Segmente FS, die nicht standardmäßige Merkmale einer Verbindung, d.h. individuelle Merkmale repräsentieren. Die genannten Call-Segmente werden für eine Verbindung in Abhängigkeit von verbindungsspezifischen Anforderungen und Teilnehmer/Netz-Merkmalen erzeugt oder entfernt.

Das Koordinierungssystem LSS koordiniert Verbindungsanforderungen, die von verschiedenen Call-Segmenten und ESIS-Segmenten herrühren. Hierzu muß das KoordinierungsSystem die von jedem Segment erhaltenen Verbindungsanforderungen zwischenspeichern. Dies geschieht in einem pro Segment zugeordneten Koordinierungsmodul LSM. Jedes Mal, wenn ein Schaltkoordinierungsmodul eine neue Verbindungsanforderung von einem Segment empfängt, wird der Zustand des Koordinierungsmoduls ausgewertet und aufdatiert. Durch einen verteilten Kontrollmechanismus zwischen den Koordinierungsmoduln wird gewährleistet, daß das Koordinierungssystem zu einer konsistenten physikalischen Verbindungsanforderung gegenüber dem Switching-Control-System PSS gelangt.

Im folgenden wird das Switching-Control-System beschrieben.

Das Switching-Control-System ist ein grundlegendes Service-System für alle Anwendersysteme des Vermittlungssystems, die Verbindungen innerhalb des Vermittlungssystems anfordern. Außer einfachen Verbindungsanforderungen behandelt das Switching-Control-System auch spezielle Verbindungsanforderungen für die Rekonfiguration von für die Anwendersysteme aufgebauten Verbindungen.

Das Switching-Control-System erzeugt pro Verbindungsanforderung jeweils eine eigenständige Instanz. Dadurch sind die Interaktionen zwischen Switching-Control-System und den Ressourcensystemen bzw. der Hauptkoppeleinrichtung von dem Zustand der Instanzen des jeweiligen Anwendersystems unabhängig.

Das Koordinierunssystem transformiert die private Sichtweise einer Verbindung, die den Segmenten (Instanzen) des Call-Control-Systems und des Signalisierungsschnittstellensystems zu eigen ist, in eine einzige konzistente Verbindungsanforderung gegenüber dem Switching-Control-System. Aus diesem Grund darf das Switching-Control-System Verbindungsaufträge von dem Koordinierungssystem in unbedingter Weise ausführen. Die einzigen Gründe für eine negative Rückmeldung zum Koordinierungssystem sind Blockierungsbedingungen der Steuerungen der Koppeleinrichtungen (z.B. eine negative Rückmeldung von einem der Ressourcen-systeme RHS) oder Fehler in den Koppeleinrichtungen selbst (z.B. eine negative Rückmeldung von einzelnen Koppeleinrichtungen).

Jede Verbindungsanforderung an das Switching-Control-System ruft eine neue Transaktion des Switching-Control-Systems hervor. Eine solche Transaktion umfaßt die Steuerung der beteiligten Ressourcensysteme und somit die Koordinierung des Aufbaus eines physikalischen Pfades durch die Koppeleinrichtungen des Vermittlungssystems.

Da die eigentliche Ressourcenbehandlung (Pfad-Ressourcen und Serviceeinheit-Ressourcen) vom Switching-Control-System getrennt ist und durch von diesen unabhängige Ressourcen-systeme durchgeführt wird, erfordert das Switching-Control-System keine Zuordnung zu einem bestimmten zentralen Steuerungsprozessor von den zentralen Steuerungsprozessoren GPx,...GPy (siehe FIG 1). Darüber hinaus gibt es keine Einschränkung dahingehend, daß Verbindungsanforderungen, die derselben Call-Kette entspringen, sich an dieselbe Instanz des PSS wenden müssen. Dies erlaubt eine sehr effektive Implementation der Funktionen des Swichting-Control-Systems innerhalb des Hardware-Systems. Jeder zentrale Steuerungsprozessor kann somit mehrere Instanzen des Switching-Control-Systems parallel bedienen. Dadurch kann ein Anwendersystem seine Verbindungsanforderungen immer an ein Switching-Control-Systems seines eigenen zentralen Steuerungsprozessors stellen. Da das Switching-Control-System auf Bestätigungen der Ressourcensysteme und/oder der Hauptkoppeleinrichtung wartet, ist es möglich, eine parallele Ausführung der Verbindungsanforderungen für unterschiedliche Verbindungen auf jeweils einem einzigen zentralen Steuerungsprozessor durchzuführen. Hierzu muß ein bestimmter Instanziierungsmechanismus pro zentralem Steuerungsprozessor zur Verfügung gestellt werden (z.B. Prozeßinstanziierung oder Dateninstanziierung).

Ressourcen, die einer Verbindung zugeordnet sind, müssen während der Dauer einer Verbindung verbindungsindividuell gespeichert werden, um die Verbindung am Ende abbauen zu können. Wenn diese Daten im Switching-Control-System gespeichert würden, müßte dieses wesentlich komplexer aufgebaut sein. Es würde z.B. jeweils eine PSS-Instanz für die gesamte Dauer der Verbindung geben, was eine zusätzliche State/Event-Kopplung innerhalb des PSS erfordern würde und darüber hinaus neue Uberprüfungen der Konsistenz der Verbindungsanforderungen zwischen dem PSS und den Anwendersystemen. Um diese vergrößerte Komplexität zu vermeiden, werden die Verbindungsdaten innerhalb des jeweiligen Anwendersystems gespeichert. Beispielsweise werden die Verbindungsdaten für das Call-Processing-System in zu dem Koordinierungssystem zugehörigen Datenfeldern gespeichert. Zu der Realisierung dieses Konzepts wird eine sogenannte "path envelope" zwischen dem Anwendersystem und dem Switching-Control-System hin- und hergereicht, die die aktuellen Verbindungsdaten (Pfaddaten und sonstige Ressourcendaten) enthalten. Während die path envelope für das Anwendersystem eine black box darstellt, wird der Inhalt dieser path envelope durch das Switching-Control-System ausgewertet, um eine optimierte Pfadsuche für die Verbindungsanforderungen durchzuführen.

Das Switching-Control-System stellt somit zusammenfassend eine Schnittstelle zwischen dem Call-Processing-System und den Ressourcensystemen bzw. der Hauptkoppeleinrichtung dar, die es dem Call-Processing-System erlaubt, kombinierte Verbindungsanforderungen, die eine Ressourcenbehandlung und ein Switching beinhalten, in einer einzigen Verbindungsanforderung an das Switching-Control-System zu stellen. Das Switching-Control-System sorgt indessen für die Koordination der Durchführung der kombinierten Verbindungsanforderung.

Im folgenden wird das Call-Control-System detaillierter beschrieben.

Das Call-Control-System umfaßt, wie bereits erwähnt, zwei Typen von Software-Einheiten, nämlich statische Einheiten (Manager) und transiente Einheiten (Segmente).

Statische Manager verwalten hauptsächlich langlebige Call-Processing-Entitäten, z.B. eine Rufnummer eines Teilnehmers oder den Typ eines Ports. Es gibt jeweils einen statischen Manager pro Entität, der eine neutrale Schnittstelle zwischen dem Call-Processing und der statischen Datenbasis bildet. Statische Manager schirmen somit die Verbindungssteuerung von der Struktur der physikalischen Datenbasis ab. Sie stellen außerdem auf die jeweilige Entität bezogene Funktionen durch, z.B. Busy/Idle-Behandlung. Um eine Effizienz bezüglich der Echtzeit zu erreichen, sind statische Manager örtlich nahe an dem von ihnen verwalteten Daten angesiedelt und können sogar innerhalb einer Software-Kapsel der physikalischen Datenbasis enthalten sein. Statische Manager kennen des weiteren alle aktiven transienten Segmente (Instanzen), denen sie momentan ihre Dienste zur Verfügung stellen und liefern diesen aktiven transienten Segmenten als Antwort Daten in einem für das Call-Processing definierten Format.

Transiente Segmente verwalten kurzlebige Entitäten, z.B. eine standardmäßige Verbindung oder ein Leistungsmerkmal. Transiente Segmente werden aufgrund von Anwender/Netz-Aktionen wie "Abnehmen" oder "Auflegen" erzeugt oder vernichtet und führen logische Call-Control-Funktionen aus, z.B. Behandeln des Belegens bzw. Auslösens eines Ports und Durchführen von spezifischen Aktionen für ein Leistungsmerkmal. Zu Beginn einer Verbindung werden die transienten Segmente erzeugt und wenden sich an ihren jeweils zugeordneten statischen Manager, um die von ihnen benötigten Daten aus der Datenbasis zu erhalten. Die transienten Segmente speichern die erhaltenen Daten und arbeiten mit diesen Daten während der gesamten Dauer einer Verbindung. Am Ende einer Verbindung werden die transienten Segmente vernichtet und damit auch die von ihnen verwalteten transienten Daten.

Im folgenden werden die einzelnen Typen der statischen Manager näher beschrieben:

Ein Access-Manager AM repräsentiert einen vom Signalisierungstyp unabhängigen physikalischen Teilnehmer-/Netz-Zugang, der durch eine logische Access-Kennung festgelegt ist. Dieser Manager kennt die zu einem bestimmten physikalichen Zugang gehörigen Ressourcen (Kanäle, Bandbreite und Terminals) sowie Blockierungsbedingungen und diesem physikalischen Zugang zugeordnete logische User Kennungen. Ein Access-Manager führt außerdem die Access-bezogene Frei/ Belegt-Behandlung durch und weist die hierzu angeforderten Access-Ressourcen zu (z.B. Zuweisung einer VPI/VCI-Nummer).

Schließlich hat ein Access-Manager für die von ihm bedienten transienten Segmente jeweils den Link zu den von dem nächsten transienten Segment geforderten Entitäten zu bestimmen.

Im Falle einer A-Verbindungsseite bedeutet "Bestimmen eines Links" für den Access-Manager das Festlegen einer logischen User-Kennung. Dies erfordert entweder das Überprüfen einer von dem User selbst gelieferten logischen User-Kennung oder das Ermitteln einer dem vorliegenden physikalischen Zugang zugeordneten logischen User-Kennung (z.B. im Falle eines Analog-Users).

Im Falle einer B-Verbindungsseite bedeutet das Bestimmen eines Links für den Access-Manager das Festlegen der logischen Signalisierungstyp-Kennung. Diese wird auf der Grundlage der logischen Access-Kennung und gegebenenfalls vorgegebener Terminals ermittelt.

Ein User-Manager UM repräsentiert einen Teilnehmer (User), der durch eine logische User-Kennung (z.B. Rufnummer) festgelegt ist. Dieser Manager kennt die für den bestimmten User vorgesehenen Grenzen für die Anforderung nach Ressourcen, administrative Blockierungsbedingungen und Features des Users.
Der User-Manager ist zuständig für alle standardmäßigen Call-Processing-Funktionen, die im Zusammenhang mit den genannten User-bezogenen Daten stehen. Der User-Manager führt außerdem die User-bezogene Frei/Belegt-Behandlung durch und weist angeforderte User-Ressourcen zu.
Schließlich bestimmt der User-Manager im Falle eines Users der B-Verbindungsseite die logische Access-Identifikation, die den Link zu den Entitäten des nächsten transienten Segmentes (ATS-Segment) bildet.

Ein Feature-Manager FM wird für individuelle Features benötigt. Er verwaltet Feature-bezogene Daten, die mit dem Teilnehmer oder der Gruppe, die dieses Leistungsmerkmal (Feature) abonniert hat, verknüpft werden. Durch den Feature-Manager wird eine Trennung der Feature-Daten von den normalen Teilnehmerdaten erreicht, so daß eine Erweiterung bzw. eine Veränderung der Leistungsmerkmale nicht notwendigerweise einen Einfluß auf das standardmäßige Call-Processing ausübt.

Ein Trunk-Group-Manager TGM verwaltet eine logische Trunk-Gruppe. Er führt eine Trunk-Auswahl auf der abgehenden Verbindungsseite durch und markiert einen Kanal der Trunk-Gruppe auf der ankommenden Verbindungsseite als belegt. Des weiteren liefert er Trunk-Group-bezogene Daten zu einem Trunk-Group-Segment TGS.

Ein Network-Routing-Manager NRM wertet die empfangenen Informationen (z.B. Wahlziffern) mit Hilfe eines Übersetzers aus und legt eine geeignete Behandlung der Verbindung fest. Der NRM kann mehrere Übersetzer steuern (z.B. POTS, CENTREX, packet etc.), die entsprechend den Wünschen der Kunden hinzugefügt und verwaltet werden können. Die neutrale Schnittstelle zwischen Call-Segmenten und dem Network-Routing-Manager schirmt die Call-Segmente von der spezifischen Architektur der Übersetzer ab.

Im folgenden werden die einzelnen Typen der transienten Segmente näher erläutert.
Ein Access-Segment ATS repräsentiert die Steuerung von Access-bezogenen Transaktionen. Es erzeugt z.B. aus jeder SETUP-Nachricht eine eigenständige Anforderung nach Access-Ressourcen. Access-Ressourcen können einen einzelnen B-Kanal oder D-Kanal eines Teilnehmers, eine einzelne Verbindungsleitung (Trunk) oder eine zugeordnete Bandbreite mit mehreren Kanälen umfassen. Das ATS steuert außerdem die Triggerung von entsprechenden Feature-Segmenten FS zur Steuerung von Access-bezogenen Features.

Ein User-Segment UTS repräsentiert die Steuerung von User-bezogenen Transaktionen. Es erzeugt hierbei jeweils eine einzelne Anforderung nach User-Ressourcen. Das UTS steuert außerdem die Triggerung von User-Features.

Ein Trunk-Group-Segment TGS steuert die Beteiligung eines Trunks einer Trunk-Gruppe in einer Verbindung. Das TGS-Segment fordert dabei von dem TGM-Manager die Durchführung der Auswahl eines Trunks auf der abgehenden Verbindungsseite und informiert ihn, daß der Trunk auf der ankommenden Verbindungsseite belegt ist.

Ein Verknüpfungs-Segment AS verknüpft ein Verbindungspaar der A-Seite und B-Seite. Es koordiniert dabei den Verbindungsaufbau und Verbindungsabbau und initiiert die Übersetzungs-/Routing-Aktivitäten durch den NRM-Manager.

Ein Feature-Segment FS steuert die Behandlung teilnehmerindividuelller Leistungsmerkmale. FS-Segmente werden in eine bereits bestehende Call-Kette eingefügt, wenn sie von einem Teilnehmer oder vom Netz angefordert werden. Jedes FS-Segment enthält Feature-bezogene Logik und hat Zugang zu Feature-bezogenen Daten der Datenbasis. Durch das FS-Segment ist die Feature-bezogene Logik somit in einer einzigen Software-Einheit zentralisiert. Advanced-Intelligent-Network-Dienste werden z.B. durch ein FS-Segment unterstützt, indem es eine Schnittstelle zu einem Service-Control-Point (SCP) bildet. Im Prinzip kann ein FS-Segment in die Call-Kette zwischen ein ESIS-Segment und ein ATS-Segment, ein ATS-Segment und ein UTS-Segment oder ein UTS-Segment und ein AS-Segment eingefügt werden. Dies hängt von derartigen Dingen wie dem relevanten Triggerpunkt und ressourcenbezogenen Anforderungen ab.

Im folgenden wird der Ablauf bei einem Verbindungsaufbau für einen standardmäßigen Call beschrieben. Zunächst erfaßt das Teilnehmeranschlußmodul eines Teilnehmers A eine Belegungs-Nachricht und sendet daraufhin eine SETPUP-Nachricht zu dem ihm zugeordneten Gruppenprozessor GP, worauf ein ESIS-Segment zum Empfang dieser Nachricht erzeugt wird. Das ESIS-Segment konvertiert die empfangene SETUP-Nachricht in eine allgemeine SETUP-Nachricht für das Call-Control-System, fordert ein ATS-Segment an und übergibt die allgemeine SETUP-Nachricht dem ATS.

Das Access-Segment ATS fordert daraufhin Access-bezogene Daten von seinem Access-Manager AM an. Der AM liest Access-bezogene Daten aus der Access-Datenbasis, führt eine Access-bezogene Belegt/Frei-Behandlung durch und übergibt schließlich die angeforderten Access-bezogenen Daten dem ATS.
Das ATS speichert die Access-bezogenen Daten, fordert ein UTS an und übergibt die SETUP-Nachricht dem erzeugten UTS.

Das UTS fordert User-bezogene Daten von seinem UM-Manager an. Der UM liest die angeforderten Daten aus der User-Datenbasis, führt eine User-bezogene Belegt/Frei-Behandlung durch und übergibt die angeforderten User-bezogenen Daten dem UTS.
Das UTS fordert daraufhin ein AS an, das seinerseits wiederum Wahlziffern anfordert. Die Anforderung von Wahlziffern wird über eine Nachricht, die die Call-Kette vom AS hinunter zum ESIS der A-Seite gesandt wird. Zu diesem Zeitpunkt besteht die Call-Kette der A-Seite aus ESIS-ATS-UTS-AS.

Nun ermittelt das ESIS anhand des Typs des Signalisierungssystems, ob ein Wählton und. ein Code-Empfänger benötigt werden und informiert das Switching-Control-System PSS über das Koordinierungssystem LSS. Das PSS bestimmt die optimale Ressourcenkonfiguration und fordert daraufhin eine Zuweisung und Verbindung der ausgewählten Ressourcen von dem entsprechenden Ressourcensystem RHS an. Das RHS speichert die Auswahl der physikalischen Ressourcen ab und steuert daraufhin die Durchschaltung der ausgewählten Ressourcen. Wenn der Code-Empfänger Wahlziffern empfängt, sendet er sie direkt zu dem zugeordneten ESIS. Das ESIS erzeugt daraufhin eine Anforderung an das Koordinierungssystem LSS zur Abschaltung des Wähltons, konvertiert die Wahlziffern in eine standardmäßige Darstellung und sendet sie die Call-Kette hinauf zu dem AS-Segment.

Die Wahlziffern fließen dabei über das ATS-Segment und das UTS-Segmet und werden schließlich vom AS-Segment empfangen. Das AS sendet die Wählziffern zum NRM-Manager, der die Wählziffern einer notwendigen Übersetzung durch Übersetzer unterziehen läßt. Sobald das Übersetzungsergebnis feststeht, gibt der NRM-Manager das Ergebnis dem AS-Segment zurück, welches daraufhin die Erzeugung eines UTS-Segments auf der B-Seite veranlaßt.

Wenn das Ende des Wählvorganges erkannt worden ist, veranlaßt das ESIS-Segment der A-Seite die Abschaltung des Code-Empfängers mittels einer entsprechenden Anforderung an das Switching-Control-System PSS via das Koordinierungssystem LSS. Das Switching-Control-System PSS beauftragt daraufhin das Ressourcensystem RHS, das die genannte physikalische Ressource, nämlich den Code-Empfänger, abschaltet und wieder freigibt.

Das UTS-Segment der B-Seite fordert nun Daten von seinem User-Manager UM, der daraufhin den Belegt-Zähler der Rufnummer überprüft und ihn inkrementiert. Das UTS-Segment der B-Seite fordert daraufhin ein ATS-Segment an. Das ATS-Segment fordert sodann Daten von seinem Access Manager AM an, der daraufhin den Access-bezogenen Belegt/Frei Status überprüft und den Access belegt.

Das ATS-Segment fordert daraufhin ein ESIS-Segment an, welches daraufhin dem Teilnehmeranschlußmodul des Teilnehmers B den Auftrag zum Belegen erteilt und die hierzu notwendigen Daten sendet. Das Teilnehmeranschlußmodul legt daraufhin den Rufstrom an. Das ESIS-Segment der B-Seite fordert nun die Anschaltung des Freitons von dem Koordinierungssystem LSS, das daraufhin eine entsprechende Anforderung an das Switching-Control-System PSS abgibt. Das PSS ermittelt den physikalischen Pfad durch die von dem Call betroffenen Koppeleinrichtungen und fordert daraufhin vom Ressourcensystem RHS die Zuweisung und Durchschaltung des Freitons.

Zu diesem Zeitpunkt wird der physikalische Weg in rückwärtiger Richtung durchgeschaltet. Der Freiton zur A-Teilnehmerseite wird also über das Teilnehmeranschlußmodul SLM_{B} geliefert.

Wenn der B-Teilnehmer abhebt, wird dies von dem ihm zugeordneten Teilnehmeranschlußmodul erkannt. Das Teilnehmeranschlußmodul schaltet daraufhin den Rufstrom ab und sendet eine OFF-HOOK-Nachricht zu dem ESIS-Segment des ihm zugeordneten Gruppenprozessors GP.

Das ESIS-Segment fordert daraufhin die Abschaltung des Freitons an, reicht eine CONNECT-Nachricht durch die Call-Kette zum AS-Segment weiter und veranlaßt dadurch den Aufbau des Sprachweges in Vorwärtsrichtung. Die Kommunikation über die Sprachwege kann nun erfolgen.

Im folgenden wird das Koordinierungssystem LSS gemäß FIG 2 näher beschrieben.

Das Koordinierungssystem koordiniert wie bereits erwähnt Verbindungsanforderungen, die von verschiedenen Segmenten herrühren. Hierzu speichert es die von den verschiedenen Segmenten empfangenen Verbindungsanforderungen. Für die Speicherung einer Verbindungsanforderung eines Segmentes ist jeweils ein Koordinierungsmodul LSM vorhanden. Jedes Mal wenn eine neue Verbindungsanforderung von einem Segment empfangen wird, wird der Zustand dieser Koordinierungsmoduln ausgewertet und aufdatiert. Der Kontrollmechanismus zwischen den Koordinierungsmoduln gewährleistet, daß das Koordinierungssystem LSS jeweils einen einzigen konsistenten Schaltauftrag an das Switching-Control-System PSS übergibt.

Um einen dynamischen Mehraufwand für den Kommunikationsbedarf des Koordinierungssystems (intern zwischen den Koordinierungsmoduln und extern zwischen den Koordinierungsmoduln und den Segmenten) zu verringern, ist das Koordinierungssystem stark mit dem ESIS-/CCS-System verbunden. Insbesondere ist ein Koordinierungsmodul jeweils so fest mit einem Segment verbunden, daß Verbindungsanforderungen von den Segmenten an das Koordinierungssystem bzw. die Koordinierungsmoduln lokale Prozeduraufrufe darstellen.

Darüber hinaus werden die Nachrichten zwischen den Segmenten benützt, um Koordinierungsinformationen zwischen den Koordinierungsmoduln zu übertragen. Dies zahlt sich besonders beim Verbindungsaufbau aus. Der Verbindungsaufbau ist nämlich besonders kommunikationsintensiv für das Koordinierungssystem, da Empfänger und Töne an und abgeschaltet werden müssen. Da der Informationfluß zwischen den Koordinierungsmoduln tatsächlich parallel zu dem Informationsschluß der Segmente verläuft entsteht kein zusätzlicher Mehraufwand bezüglich der Kommunikation des Call-Processing-Systems, wenn Nachrichten zwischen den Koordinierungsmoduln in Nachrichten zur Kommunikation zwischen den Segmenten eingebettet werden.

Obwohl somit das Koordinierungssystem sehr stark mit ESIS/CCS-System verbunden ist, bleibt dennoch eine klare Auftrennung zwischen dem Koordinierungssystem und dem ESIS/CCS-System vorhanden, nämlich eine wohldefinierte Prozedur-Schnittstelle.

Abgesehen von der Koordinierung der Verbindungsanforderungen der Segmente, dient das Koordinierungssystem auch der Übersetzung der Verbindungsanforderungen in Schaltaufträge für das Switching-Control-System. Die Segmente können sich daher bei der Formulierung ihrer Verbindungsanforderungen auf eine sehr abstrakte Beschreibung beschränken (abstrakte Sichtweise einer Verbindung ), die die gesamte Koppeleinrichtung als eine Black box ansieht.

Im folgenden wird die Sichtweise der Segmente und der Koordinierungsmoduln bezüglich einer Verbindung anhand von FIG 3 näher erläutert.

Die meisten Segmente besitzen zwei Links, nämlich Link-X und Link-Y. Segmente für spezielle Leistungsmerkmale können jedoch auch mehr als zwei Links besitzen, z.B. das Segment zur Realisierung des Drei-Wege-Calling hat drei unmittelbare Nachbarsegmente in der Call-Kette und damit drei Links. Die Segmente assoziieren mit jedem ihrer Links jeweils eine bestimmte Verbindungsseite. Diese Assozation wird bei der Erzeugung des Segmentes durch entsprechende Zuordnung festgelegt. Gemäß dieser Sichtweise formuliert ein Segment eine Verbindungsanforderung immer mit Hilfe seiner logischen Links, z.B. "Verbinde Link-X mit Link-Y" oder "Verbinde Link-X mit einer Ansage".

Ein Koordinierungsmodul LSM, das einem bestimmten Segment fest zugeordnet ist, besitzt zur Zwischenspeicherung einer Verbindungsanforderung die gleichen Datenfelder wie das zugehörige Segment. Ein Koordinierungsmodul kennt also dieselben Links wie sein zugeordnetes Segment. Im Unterschied zum Segment werden diese Links in der Sichtweise eines Koordinierungsmoduls jedoch mit der Portadresse assoziiert.

Für eine ATM-Koppeleinrichtung bedeutet der einem Teilnehmer oder einer Verbindungsleitung zugeordnete Verbindungsendpunkt eine VCI-/VPI-Nummer. Für ein Koordinierungsmodul bedeutet der Verbindungsendpunkt - wie bereits erwähnt - eine VPI-/VCI-Nummer an einem bestimmten Port. Die Portadresse (inklusive belegte VPI-/VCI-Nummer) eines Verbindungsendpunktes der Call-Kette wird durch den Access-Manager AM verwaltet und jedes Mal dann über die Call-Kette den entsprechenden Koordinierungsmoduln übergeben, wenn eine von einem aktiven Verbindungsendpunkt ausgehende Anforderung erkannt wird.

Im folgenden wird der Einfachheit halber ein Verbindungsendpunkt als "Port" bezeichnet, ohne die zugeordnete VPI-/VCI-Nummer explizit zu erwähnen.

Die Verbindungs-Sichtweise (connection view) eines Koordinierungsmoduls umfaßt außer der Portadresse und VPI-/VCT-Nummer auch den Typ des betroffenen Ports (Port ist hier im Sinne von Verbindungsendpunkt zu verstehen). Wenn eine Ressource (passiver Port) mit einem bestimmten Link verbunden werden soll, wird durch die Verbindungsanforderung eines Segmentes auch der Typ der Ressource angegeben (z.B. Ansage, Broadcast tone, Brücke). Die Aktionen des Koordinierungssystems für eine empfangene Verbindungsanforderung von einem bestimmten Segment hängen vom Verbindungszustand und den assoziierten Porttypen ab. Der genannte Zustand wird dabei durch die Gesamtheit der in den Koordinierungsmoduln abgespeicherten Zustände gebildet. Um eine Verbindungsanforderung auszuführen ist deshalb ggf. eine Kommunikation zwischen den Koordinierungsmoduln erforderlich. Beispiele für Port-Typen sind: "Aktiver Port" für Ports die einem Teilnehmer oder einer Verbindungsleitung zugeordnet sind, "Ansage-Port", "Brücken-Port", und "O-Port" für keine Verbindungen.

Im folgenden wird der interne Kontrollmechanismus des Koordinierungssystems beschrieben.

Anreizsignale von aktiven Ports, die mit Teilnehmern oder Verbindungsleitungen assoziiert werden, müssen koordiniert werden. Für einen standardmäßigen Call gibt es genau zwei aktive Ports, die der A-Seite und der B-Seite der standardmäßigen Verbindung zugeordnet werden. Um ein Anreizsignal von einem aktiven Port, bzw. genauer gesagt die daraus abgeleitete Verbindungsanforderung, zu koordinieren, wird ein Kontrollmechanismus angewandt. Gemäß diesem Kontrollmechanismus wird die Kontrolle über einen aktiven Port zu einem bestimmten Zeitpunkt immer genau einem Koordinierungsmodul des Koordinierungssystems zugeordnet. Wenn ein Koordinierungsmodul die genannte Kontrolle über einen Port hat, kann es für diesen Port Verbindungsanforderungen an das Switching-Control-System PSS senden.

Wenn ein Segment eine Verbindungsanforderung für einen Port stellt, über den sein ihm zugeordnetes Koordinierungsmodul zu diesem Zeitpunkt keine Kontrolle hat, gibt es drei Alternativen:
1. Alternative: Das Koordinierungsmodul ist berechtigt, die Kontrolle über den Port (Verbindungsendpunkt) von einem anderen Koordinierungsmodul anzufordern,
2. Alternative: Das Koordinierungsmodul muß warten, bis ein anderes Koordinierungsmodul die Kontrolle über den Port freigibt,
3. Alternative: Das Koordinierungsmodul ist berechtigt, die Anforderung einem anderen Koordinierungsmodul zu übergeben, das die Kontrolle über den Port erlangen kann.

Die Auswahl einer der genannten Alternativen erfolgt nach Prioritätsregeln, die mit den Prioritätsregeln für die Segmente des ESIS-/CCS-Systems übereinstimmen. Beim ESIS-/CCS-System besitzen Segmente, die näher an der Signalisierungsquelle (aktiver Port) liegen, Priorität für Signale, die auf ihrer Verbindungsseite entstehen. Analog dazu besitzen beim Koordinationssystem LSS diejenigen Koordinierungsmoduln, die innerhalb der Call-Kette der Signalisierungsquelle am nähesten liegen, die höchste Priorität für die Kontrolle des aktiven Ports ihrer Verbindungsseite. Dies bedeutet, daß Verbindungsanforderungen von weiter entfernt liegenden und damit weniger priorisierten Segmenten gegenüber solchen, die näher am aktiven Port liegen, nachgestellt werden. Nachgestellte Verbindungsanforderungen werden im Koordinierungsmodul des anfordernden Segments gespeichert und werden aktiv sobald das höher priorisierte Segment die Kontrolle über den aktiven Port freigibt.

Beim Call-Control-System CCS spielt das AS-Segment eine zentrale Rolle als Bindeglied zwischen Segmenten der A-Seite und der B-Seite. Diese zentrale Rolle bleibt auch für das AS-Koordinierungsmodul erhalten. Das AS-Koordinierungsmodul ist das einzige Koordinierungsmodul, das die Kontrolle über den Port der A-Seite und der B-Seite erlangen kann. Alle anderen Koordinierungsmoduln können nur die Kontrolle über den auf ihrer Verbindungsseite liegenden Port erlangen.

Da das AS-Koordinierungsmodul das einzige Koordinierungsmodul ist, das gleichzeitig die Kontrolle über die A-Seite und die B-Seite erlangen kann, ist es auch das einzige Koordinierungsmodul, das einen Schaltauftrag an das Switching-Control-System PSS übergeben kann, der eine Durchschaltung zwischen der A-Seite und der B-Seite bewirkt.

Durch die zentrale Rolle des AS-Koordinierungsmoduls wird es ermöglicht, die Kommunikation zwischen den Koordinierungsmoduln auf eine Hälfte der Call-Kette zu beschränken, wobei die Koordinierung der beiden Hälften durch das AS-Koordinierungsmodul gemanagt wird. Während ein normales Koordinierungsmodul niemals die Kontrolle über einen aktiven Port, der jenseits des AS-Koordinierungsmoduls liegt, erlangen kann, kann das mit diesem Koordinierungsmodul assoziierte Segment dennoch eine Verbindungsanforderung zur entfernten Verbindungsseite senden. Diese entfernten Verbindungsanforderungen müssen dem AS-Koordinierungsmodul übergeben werden, das die jeweilige Verbindungsanforderung schließlich an das Switching-Control-System weitergeben kann, sobald es die Kontrolle über die beteiligten Ports erlangt hat.

Die genannten Prioritätsregeln gelten in entsprechender Weise bezüglich eines Ports einer entfernten Verbindungsseite. Ein Koordinierungsmodul, das dem entfernten Verbinsdungsendpunkt am nähesten liegt, wird gegenüber den dem Verbindungsendpunkt entfernter liegenden Koordinierungsmoduln priorisiert.

Der erläuterte Kontrollmechanismus für Verbindungsanforderungen an das Koordinierungssystem ist durch die interne Struktur der Daten und der Logik des Koordinierungssystems realisiert. Um eine effektive Koordination innerhalb des Koordinierungssystems zu erreichen, umfassen die in einem Koordinierungsmodul enthaltenen Zustandsinformationen, abgesehen von den privaten Verbindungsdaten auch Informationen über den Ort in der Call-Kette, der momentan die Kontrolle über einen beteiligten Verbindungsendpunkt besitzt. Diese Information wird jedes Mal dann aufdatiert, wenn die genannte Kontrolle an ein anderes Koordinierungsmodul übergeben wird. Verbindungsanforderungen (Connection requests) an ein Koordinierungsmodul stammen entweder von einem Segment oder von einem anderen Koordinierungsmodul.

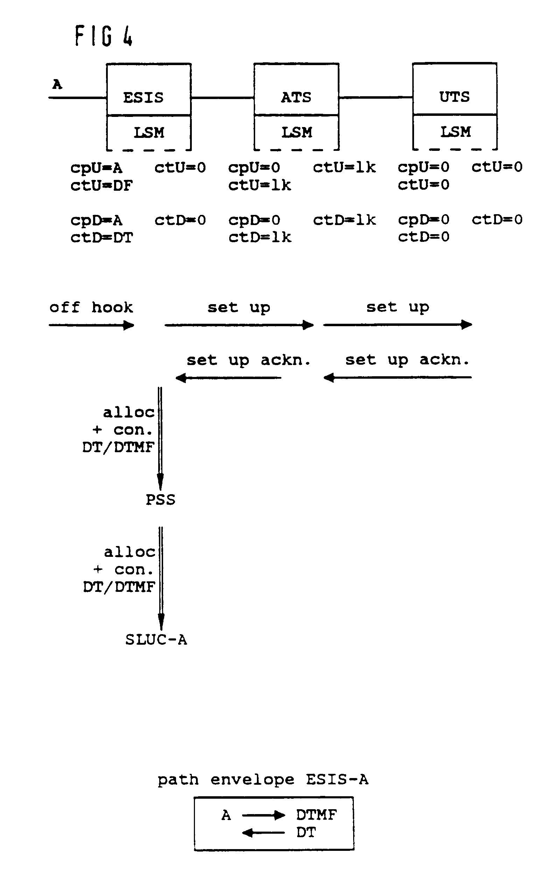

Anhand der Figuren 4 bis 15 werden im folgenden verschiedene Verbindungssteuerungsvorgänge näher erläutert.

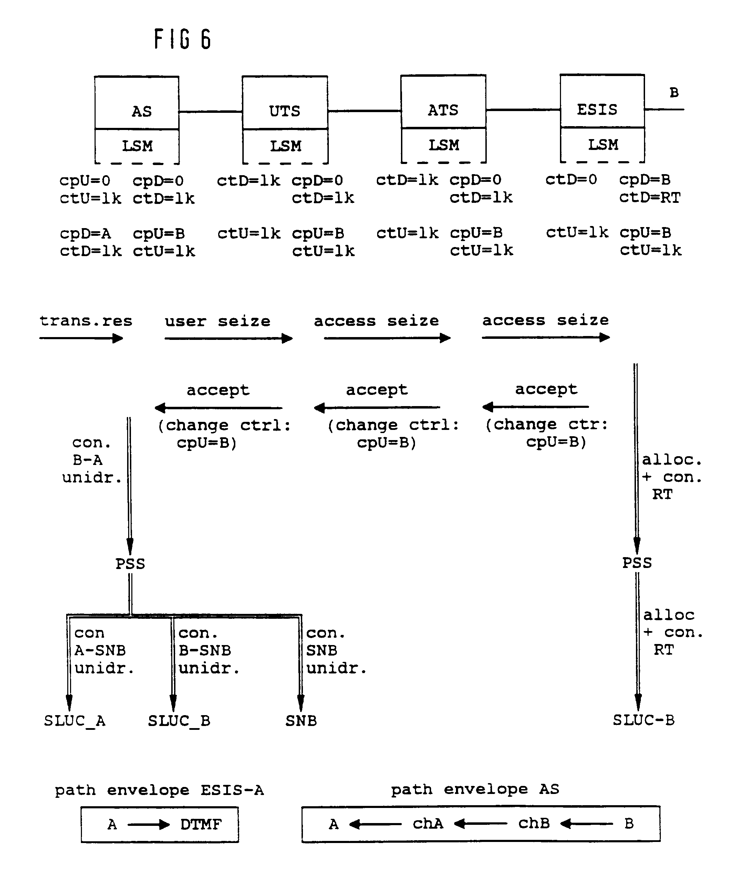

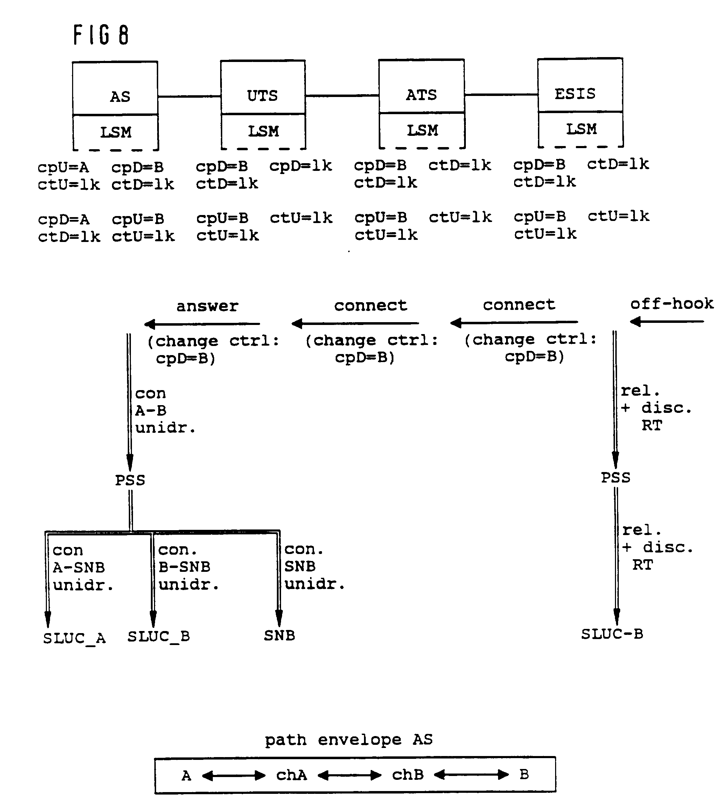

In den genannten Figuren bedeuten waagerechte Pfeile den Fluß von Nachrichten zwischen Segmenten des ESIS/CCS-Systems, wobei diese Nachrichten auch Informationen zum Nachrichtenaustausch zwischen den Koordinierungsmoduln LSM des Koordinierungssystems LSS beinhalten. Senkrechte Pfeile bedeuten den Fluß von Nachrichten zwischen dem Call-Control-System CCS und dem Koordinierungssystem LSS Doppelt gezeichnete senkrechte Pfeile bedeuten entweder den Fluß von Nachrichten zwischen dem Koordinierungssystem LSS und dem Switching-Control-System PSS oder zwischen dem Switching-Control-System PSS und dem Ressourcen-System RHS bzw. dem Hauptkoppelnetz SNB. Die Prozedur-Schnittstelle zwischen dem ESIS/CCS-System und dem Koordinierungssystem LSS ist nicht für alle Nachrichtenflüsse dargestellt. Nachrichten zwischen dem Switching-Control-System PSS und dem Hauptkoppelnetz SNB sind nur in den Figuren 6 und 8 dargestellt.

Die dargestellten Nachrichtenflüsse umfassen Daten, die den aktuellen Zustand bzw. die Datenfelder eines Koordinierungsmoduls LSM verändern. Unter den Datenfeldern der Koordinierungsmoduln sind insbesondere die ct-Felder und cp-Felder erwähnenswert, in denen Informationen bezüglich jedes Links eines Koordinierungsmoduls LSM abgespeichert sind und die im folgenden näher beschrieben werden.

Der Inhalt eines ct-Feldes beschreibt, mit welcher Ressource bzw. welchem Link ein betrachteter Link verbunden ist, bzw. genauer gesagt, verbunden werden soll. Im ct-Feld wird also die neueste Verbindungsanforderung eines ESIS/ CCS-Segmentes bezüglich jedes Links des Segmentes abgespeichert. Da die ct-Felder die individuelle Sicht eines Segmentes bezüglich der zugehörigen Verbindung wiedergeben, werden sie auch von diesem Segment beherbergt und dürfen niemals durch die Kommunikation zwischen den Koordinierungsmoduln LSM verändert werden. Gültige Typen für ct-Felder sind beispielsweise "Link" (d.h. die Verbindung ist aus der Sichtweise (view) der Segmente realisiert), "Ansage/Ton/Brücke" (d.h. das Segment hat die Verbindung einer Ansage, eines Tones oder einer Brücke zu dem entsprechenden Link angefordert) oder Null (d.h. die Verbindung bzw. der Link ist aus der Sichtweise des Segmentes wieder abgebaut).

Die cp-Felder geben den "Verbindungsendpunkt" (CONNECTION END POINT) eines betrachteten Links an. Sie beinhalten die Information über die Portadresse der physikalischen Entität, die mit dem betrachteten Link assoziiert wird. Aus diesem Grund dürfen cp-Felder nur aufgrund von Nachrichten zwischen den Koordinationsmoduln, die die Kontrolle eines aktiven Ports weiterreichen, geändert werden, und niemals aufgrund von Verbindungsanforderungen von Segmenten. Gültige Nachrichtentypen für cp-Felder sind "Aktiver Port" (d.h. das Koordinierungsmodul besitzt die Kontrolle oder die Kontrolle ist näher am AS-Koordinierungsmodul) oder "Ansage/Ton/Brücke/Null" (d.h. ein Koordinierungsmodul, das näher zum aktiven Port liegt, hat die Kontrolle wieder erlangt).

Die cp-Felder sind nur für solche Koordinierungsmoduln (genauer gesagt für diejenigen Links eines Koordinierungsmoduls) vorgesehen, die Kontrolle über den mit dem betrachteten Link assoziierten aktiven Port (aktiven Verbindungspunkt) erhalten können, d.h. welche die Berechtigung zur Abgabe eines Schaltauftrages (Switching Command) bezüglich des von ihnen kontrollierten aktiven Ports bekommen können. Aus diesem Grund besitzen alle Koordinierungsmoduln der A-Seite nur ein cp-Feld, nämlich für denjenigen Link, der zu dem Port der A-Seite führt. Analoge Verhältnisse gelten entsprechend für die Koordinierungsmoduln bzw. Links der B-Seite. Das Koordinierungsmodul AS hat als einziges Koordinierungsmodul also zwei cp-Felder, da es die gleichzeitige Kontrolle über zwei "Aktive Ports" erlangen kann (d.h. einen Schaltauftrag zur Verbindung von zwei "Aktiven Ports" an das Switching-Control-System PSS abgeben kann).

Um die cp-Felder aufzudatieren, werden die bereits beschriebenen Prioritätsregeln angewandt. Die Kontrolle über einen aktiven Port wird dabei durch eine "CHANGE CONTROL"-Nachricht innerhalb des Koordinierungssystems weitergereicht. Diese Nachricht kann die Information "Aktiver Port" (d.h. die Kontrolle wird dem nächsten Koordinierungsmodul angeboten), "Null" (d.h. die Kontrolle wird von einem weniger priorisierten Koordinierungsmodul zurückgefordert) oder die Information über eine Ressource "(Ansage/Ton/Brücke) beinhalten (d.h. die Kontrolle wird von einem weniger priorisierten Koordinierungsmodul zurückgefordert und die genannte Ressource soll zu dem gegenüberliegenden aktiven Port durchgeschaltet werden).

In den folgenden zu erläuternden Figuren wird ein separates Vorwärts-/Rückwärts-Schalten für die Verbindung von Empfängern usw. betrachtet. Damit ein unabhängiges Durchschalten der Vorwärts- und Rückwärtsrichtung einer Verbindung gewährleistet werden kann, ist auch der Kontrollmechanismus des Koordinierungssystems für beide Verbindungsrichtungen unabhängig realisiert. Aus diesem Grunde sind für jeden Link separate cp/ct-Felder für die Vorwärts- und Rückwärts-Richtung vorgesehen. In den durch die Pfeile dargestellten Nachrichtenflüssen wird dies durch einen Index U oder D für die cp/ct-Felder angezeigt. Während der Index U für die Richtung "hinauf zum entfernten Port" steht, steht der Index D für die Richtung "hinunter zum eigenen Port".

In den genannten Figuren ist klar erkennbar, daß es im Segment AS einen Wechsel der Verbindungsrichtung gibt. Dieser Umstand erklärt sich daraus, weil das Segment AS die Mitte der Call-Kette repräsentiert und deshalb die Verbindungsrichtung mit dem Index U auf der einen Hälfte der Call-Kette der Verbindungsrichtung mit dem Index D auf der anderen Hälfte der Call-Kette entspricht.

Die in den cp/ct-Feldern enthaltenen logischen Verbindungsanforderungen repräsentieren den Zustand der Verbindung, wenn alle in der jeweiligen FIG dargestellten Nachrichten verarbeitet worden sind. Zu dem in einer FIG jeweils dargestellten Verbindungszustand ist des weiteren unterhalb der Nachrichtenflüsse die Path Envelope angegeben, die vom Switching-Control-System nach Ausführung eines Schaltauftrags an das Koordinierungssystem zurückgegeben wird.

Es folgt eine Liste mit Kurzerklärungen für Bezeichnungen, die in den folgenden Figuren verwendet werden.
- cpU: = Verbindsungsendpunkt aufwärts (connection ned point upward)
- cpD: = Verbindungsendpunkt abwärts (connection end point downward"
- ctU: = verbunden mit aufwärts (connected to upward)
- ctD: = verbunden mit abwärts (connected to downward)
- A: = Teilnehmer der A-Seite
- B: = Teilnehmer der B-Seite
- DT: = Wählton (diare tone)
- DF: = DTMF-Empfänger
- RT: = Freiton zur A-Seite (ringtone to A-side)
- TN: = Ton
- lk: = Link der Call-Kette
- chA: = VCI/VPI-Nummer auf dem Link SLU_{A}
- chB: = VCI/VPI-Nummer auf dem Link SLU_{B}
- RHS: = Ressourcensystem
- SLU: = Teilnehmeranschlußeinheit (subscriber line unit)
- alloc: = Zuweisung (allocation)
- con: = Verbindung (connection)
- transres: = Ubersetzungsergebnis von NRM/manager (translation result)
- prov: = provide

Anhand der Figuren 4 bis 8 wird nun nochmals der Aufbau einer standardmäßigen Verbindung betrachtet und hierbei insbesondere die Beteiligung des Koordinierungssystems LSS.

FIG 4 zeigt die Nachrichtenflüsse nach dem Empfang der Anreiznachricht "off hook" sowie den Zustand der Verbindung vor dem Empfang der Wahlziffern (digits). Handelt es sich bei dem rufenden Teilnehmer um einen ISDN-Teilnehmer, so wird die Zuweisung eines B-Kanals erst durch den Access Manager AM bewirkt. Damit ist das Segment ATS das erste Segment in der call-Kette, das die Portadresse der A-Seite erhält. Diese Portadresse wird sodann an das Segment ESIS zusammen mit Daten, die den Signalisierungstyp des vorliegenden Access betreffen, zurückgegeben (in der Nachricht "set up acknowledgement"). Das Koordinierungsmodul des Segments ESIS kann die zurückgegebene Portadresse dann in seinem cp-Feld speichern. Durch die Portadresse hat das ESIS-Koordinierungsmodul zugleich die Kontrolle über den Verbindungsendpunkt der A-Seite erhalten (Initialisierung der Kontrolle).

Der in FIG 4 vorliegende Signalisierungstyp des Teilnehmers A erfordert eine Anschaltung des Wähltons DT sowie des DTMF-Empfängers. Aus diesem Grund wird eine kombinierte Zuweisungs-/Verbindungs-Anforderung an das Switching-Control-System PSS übergeben. Das Switching-Control-System erkennt, daß die Ressourcen DT und DTMF in der Teilnehmeranschlußeinheit SLU_{A} des Teilnehmers A verfügbar sind, und beauftragt die Steuerung SLUC der genannten Teilnehmeranschlußeinheit, eine entsprechende Anschaltung der genannen Ressourcen über das interne Koppelfeld ASNS zu schalten.

Aus FIG 4 ist ersichtlich, daß der Verbindungsaufbau aus der Sichtweise des Segmentes ATS bereits vor dem Empfang der Wahlziffern abgeschlossen ist, da die ct-Felder dieses Segmentes bereits für beide Verbindungsrichtungen belegt sind. Weitere Nachrichten des call processing, die ebenfalls die Steuerung des Verbindungsaufbaus betreffen, werden somit von diesem Segment unbeeinflußt weitergeleitet.

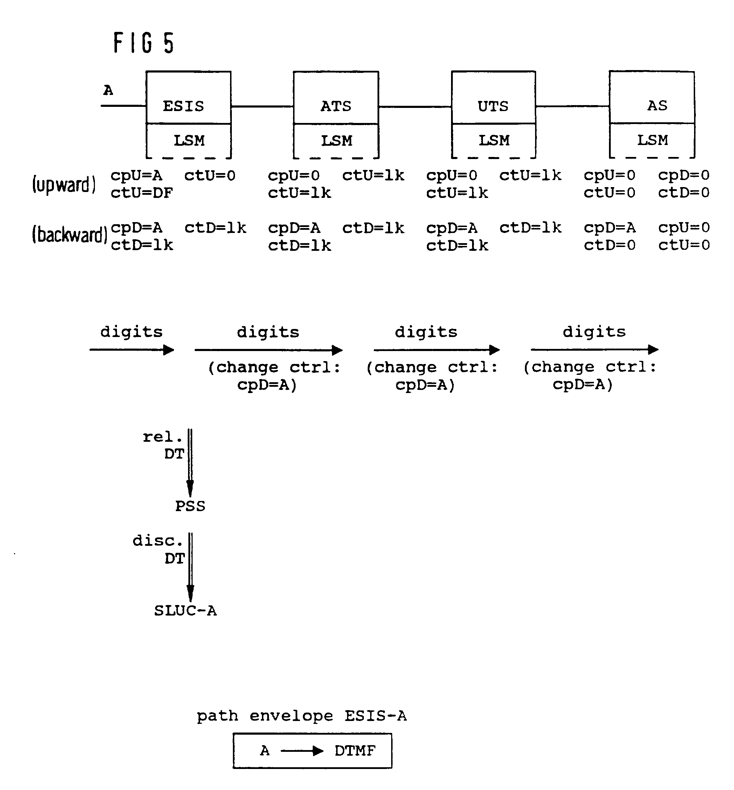

FIG 5 zeigt den Empfang der Wahlziffern und den Zustand der Verbindung vor dem Empfang des Übersetzungergebnisses. Mit dem Empfang der Wählziffern wird der Wählton abgeschaltet. Innerhalb der call control-Nachricht "digits" wird gleichzeitig die Koordinierungssystem-Nachricht "change control" für die Koordinierungsmoduln weitergegeben, durch die die Kontrolle über den Verbindungsendpunkt der A-Seite bis zum AS-Koordinierungsmodul weitergegeben wird.

FIG 6 zeigt die Situation nach dem Empfang des Übersetzungsergebnisses (translation result) sowie den Zustand der Verbindung auf der B-Seite vor dem Erzeugen der Nachricht "end of dial". Nach dem Erhalt des Ubersetzungsergebnisses von NRM-Manager wird der Port der B-Seite durch den Access Manager logisch belegt. Die zur Belegung erforderliche Portadresse muß deshalb zusammen mit der Nachricht "access seize" die call-Kette hinunter bis zum Segment ESIS gereicht werden. Das Koordinierungsmodul des Segmentes ESIS wird daraufhin seine cp-Felder mit dieser Portadresse initialisieren.

Die Darstellung in FIG 4 basiert auf der Annahme, daß der Freiton über die Teilnehmeranschlußeinheit SLU_{B} des B-Teilnehmers zum Zwecke der Synchronisation von Klingelzeichen und Freiton angelegt wird. Dies bedeutet, daß der Freiton über die SLU_{B} des B-Teilnehmers zum Teilnehmer der A-Seite unidirektional durchgeschaltet wird. Sobald das Koordinierungsmodul des Segmentes ESIS die Nachricht "access seize" erhält, beauftragt es das Switching-Control-System, den Freiton zur Teilnehmeranschlußeinheit (linecard) des B-Teilnehmers durchzuschalten und übergibt, eingebettet in der Nachricht "accept", dem Call-Control-System die Nachricht "change control" die Call-Kette hinauf bis zum AS-Koordinierungsmodul. Die Koordinierungsmoduln bis hinauf zum AS-Koordinierungsmodul beschreiben ihre CP-Felder während der Weitergabe von "change control" mit der Portadresse des B-Teilnehmers.

Da das AS-Koordinierungsmodul nun die Kontrolle über die beiden aktiven Ports A und B in Rückwärts-Verbindungsrichtung besitzt, kann es nun die Durchschaltung der Verbindung in Rückwärts-Richtung durch ein entsprechndes Kommando an das Switching-Control-System PSS veranlassen.

Wenn die A-Seite und die B-Seite verschiedenen Teilnehmeranschlußeinheiten angehören, muß das Switching-Control-System PSS die Durchschaltung der Verbindung über drei Koppeleinrichtungen, nämlich der Koppeleinrichtung ASNS der Teilnehmeranschlußeinheit SLU_{B}, der Koppeleinrichtung ASNS der Teilnehmeranschlußeinheit SLU_{B} und der Hauptkoppeleinrichtung SNB. Das Switching-Control-System führt den Auftrag aus, indem es zunächst die Steuerungen SLUC_{A} und SLUC_{B} der entsprechenden Teilnehmeranschlußeinheiten auffordert, die Links zur Hauptkoppeleinrichtung SNB auszuwählen. Wenn die beiden genannten Steuerungen die ausgewählten Links und VCI/VPI-Nummern zur Hauptkoppeleinrichrichtung SNB dem Switching-Control-System mitgeteilt haben, kann das Switching-Control-System die Verbindung der Links über die Hauptkoppeleinrichtung SNB veranlassen.

Es wird so lange kein Klingelzeichen veranlaßt, solange die Teilnehmeranschlußseite des B-Teilnehmers nicht aktiviert ist, da der B-Teilnehmer bis zu diesem Zeitpunkt noch immer abheben könnte um einen anderen Anruf zu initiieren. Auch dieser extrem seltene Fall muß durch das Call processing behandelt werden können. Deshalb wird das Klingelzeichen und der Freiton zueinander synchron erst dann angelegt, wenn die Nachricht "set up complete" von der B-Seite empfangen wird. Ab diesem Zeitpunkt wird ein Abnehmen als Antwort interpretiert.

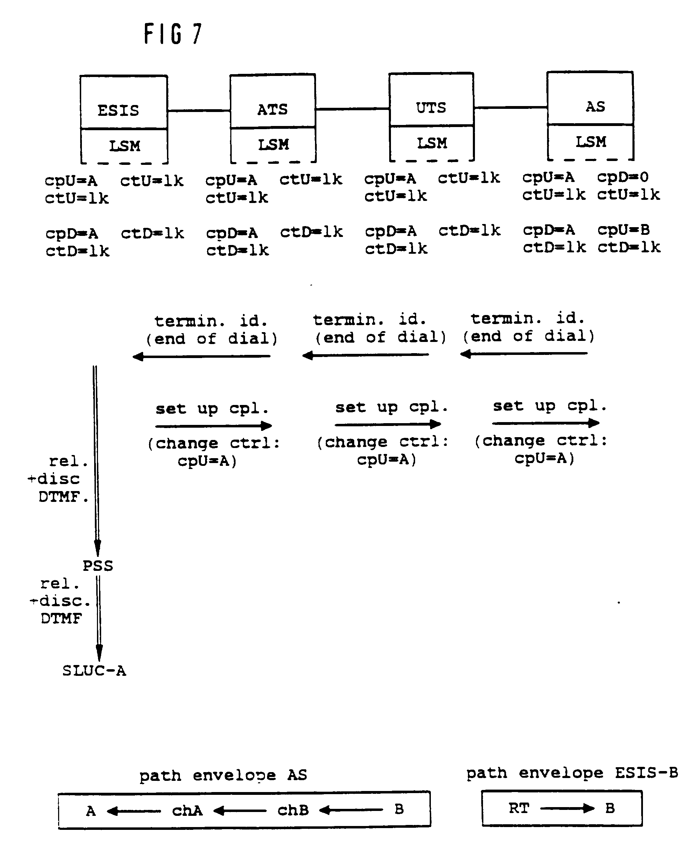

FIG 7 zeigt den Zustand der Verbindung auf der A-Seite nach dem Empfang der Nachricht "end of dial" und vor dem Abnehmen des B-Teilnehmers. Wenn das Segment ESIS der A-Seite die Nachricht "end of dial" empfängt, veranlaßt es das Abschalten des DTMF-Empfängers. Daraufhin wird die Nachricht "change control" für die Aufdatierung der cp-Felder der Koordinierungsmoduln der A-Seite die Call-Kette hinauf zum AS-Koordinierungsmodul gereicht, wiederum eingebettet in eine Call-processing-Nachricht, nämlich in die Nachricht "set up complete".

FIG 8 zeigt den Zustand der Verbindung auf der B-Seite bei Abschluß des Verbinungsaufbaus sowie den vorherigen Ablauf anhand der Nachrichtenflüsse. Sobald das ESIS-Koordinierungsmodul der B-Seite die Signalisierungsnachricht "off hook" empfängt, veranlaßt es das Abschalten des Freitons. Außerdem sendet es die Nachricht "change control" zum Aufdatieren der übrigen Koordinierungsmoduln der B-Seite die Call-Kette hinauf (eingebettet in die Call processing Nachricht "connect"). Das AS-Koordinierungsmodul veranlaßt schließlich nach Erhalt der Kontrolle das Durchschalten der Vorwärts-Verbindungsrichtung von A nach B.

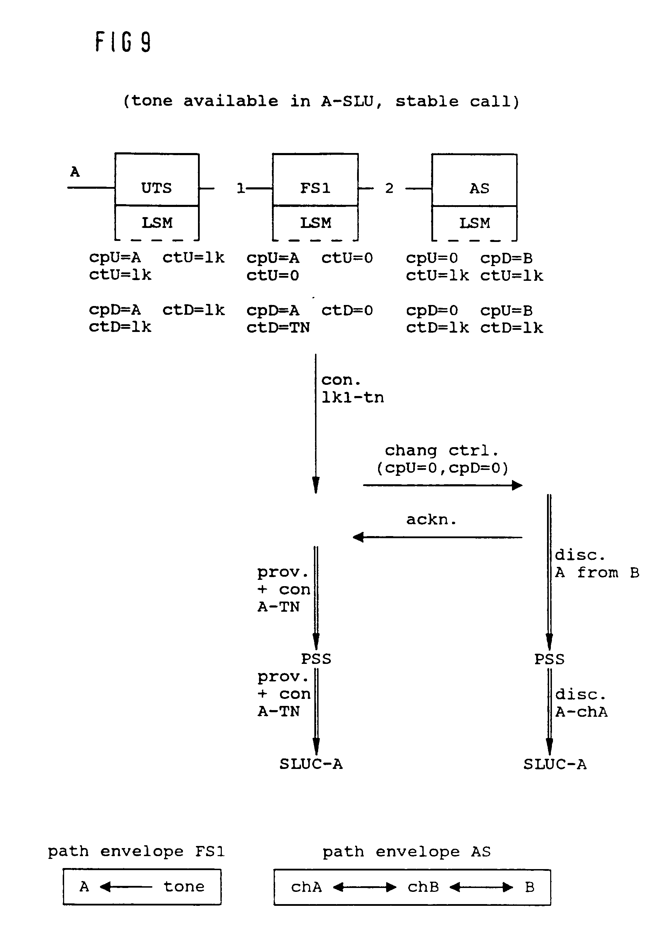

Im folgenden wird die Arbeitsweise des Koordinierungssystems anhand weiterer in den Figuren 9 bis 15 dargestellter Beispiele näher erläutert.

FIG 9 zeigt das Anlegen eines Tons an einen stabilen Call. In diesem Beispiel bricht während eines stabilen Calls ein Featuresegment FSl in die Call-Kette auf der A-Seite ein. Das mit dem Featuresegment FSl assoziierte Koordinierungsmodul wird daraufhin gemäß dem momentanen Verbindungszustand initialisiert. Aufgrund der Initialisierung erkennt das FSl-Koordinierungsmodul, daß die Kontrolle über den aktiven Port seiner Verbindungsseite momentan beim AS-Koordinierungsmodul liegt. Da das FSl-Koordinierungsmodul gegenüber dem AS-Koordinierungsmodul Priorität besitzt, kann es die Kontrolle über den aktiven Port von diesem zurückfordern. Dies wird beispielsweise dann erforderlich, wenn das FSl-Koordinierungsmodul einen Ton an die A-Seite anlegen will. In diesem Fall sendet es eine in eine "change control"-Nachricht eingebettete Anforderung zum Erhalt der Kontrolle über die A-Seite die Call-Kette hinauf zum AS-Koordinierungsmodul. Das AS-Koordinierungsmodul unterbricht daraufhin die Verbindung zwischen A und B und übergibt die Kontrolle über die A-Seite an das FSl-Koordinierungsmodul. Da die genannte Anforderung zum Erhalt der Kontrolle jedes zwischen dem FSl-Koordinierungsmodul und dem AS-Koordinierungsmodul liegende Koordinierungsmodul durchläuft, erkennen alle diese Koordinierungsmoduln, daß die Kontrolle über den A-Port nun auf die von ihnen aus gesehen andere Verbindungsseite gewechselt hat. Sobald das FSl-Koordinierungsmodul die Kontrolle über den A-Port erhalten hat, kann es eine Verbindungsanforderung an das Switching-Control-System PSS stellen, um so die Verbindung zwischen Port A und dem Ton herzustellen.

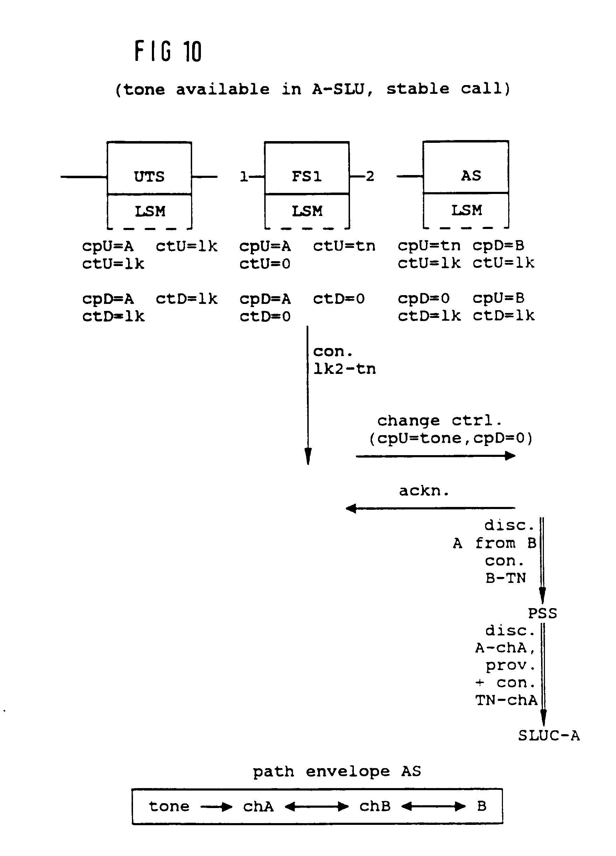

FIG 10 zeigt das Anlegen eines Tons zur entfernten Verbindungsseite, nämlich hier der B-Seite. Analog zum Ablauf gemäß FIG 9 wird auch hier die Anforderung zum Erhalt der Kontrolle ausgehend vom FSl-Koordinierungsmodul zum AS-Koordinierungsmodul weitergereicht, das die Kontrolle über die A-Seite und die B-Seite besitzt. Gleichzeitig mit der Anforderung zum Erhalt der Kontrolle wird außerdem die an das FSl-Koordinierungsmodul gestellte Verbindungsanforderung an das AS-Koordinierungsmodul weitergereicht, da das FSl-Koordinierungsmodul über die B-Seite keine Kontrolle erlangen kann. Das AS-Koordinierungsmodul realisiert die Verbindungsanforderung durch ein entsprechendes Kommando an das Switching-Control-System. In der Quittungsmeldung "acknowledge" zum Feature-Segment FSl wird die Kontrolle über den Port A an das Feature-Segment FSl zurückgegeben. FIG 10 zeigt die Situation nach Austausch aller Koordinierungsnachrichten:
die Kontrolle über den Port A liegt bei FSl, während die Verbindung zwischen der B-Seite und dem Ton im AS-Koordinierungsmodul realisiert ist (d.h. nur das AS-Koordinierungsmodul besitzt eine path envelope !). Sobald das FSl-Segment die Verbindungsanforderung bezüglich des Anlegens des Tones beendet, verzichtet das zugehörige FSl-Koordinierungsmodul auf die Kontrolle über die A-Seite. Dadurch erhält das AS-Koordinierungsmodul die Kontrolle über die A-Seite zurück und die ursprüngliche Verbindung zwischen A und B wird wieder hergestellt.

Wie anhand der Figuren 4 bis 10 bereits mehrfach dargestellt, erzeugt das Switching-Control-System zur Durchführung einer Verbindungsanforderung jeweils eine path envelope und übergibt diese nach Ausführunga der Verbindungsanforderung dem Koordinierungssystem. Das Koordinierungssystem gibt nun seinerseits die erzeugte path envelope dem Switching-Control-System für jeden neuen Verbindungssteuerungsvorgang wieder zurück, z.B. für jede Anforderung zumn Verbindungsabbau, zur Verbindungsunterbrechung oder zur Verbindungsrekonfiguration. In diesen genannten Fällen wertet das Switching-Control-System die path envelope erneut aus, um eine der genannten Verbindungsanforderungen auszuführen. Um eine flexible Pfadbehandlung für die genannten Verbindungsanforderungen, insbesondere die komplexe Verbindungsanforderung zur Verbindungsrekonfiguration zu gewährleisten, stellt das Switching-Control-System dem Koordinierungssystem zwei Funktionen zur Verfügung, nämlich eine Release-Funktion und eine Disconnect-Funktion, die durch die Anforderungen "release" bzw. "disconnect" ausgelöst werden.

Aufgrund der Release-Anforderung, mit der gleichzeitig die path envelope dem Switching-Control-System übergeben wird, wird der komplette Pfad abgebaut. Das Switching-Control-System beauftragt hierbei das Ressourcensystem RHS, alle der Verbindung zugeordneten Ressourcen freizugeben und lokale Pfade abzubauen. Das Switching-Control-System veranlaßt darüber hinaus auch den Abbau der Pfade über die Hauptkoppeleinrichtung, indem es entsprechende Kommandos zu den Moduln der Hauptkoppeleinrichtung, die die Header-Übersetzung bewirken, sendet.

Aufgrund der Disconnect-Anforderung, mit der ebenfalls gleichzeitig die path envelope an das Switching-Control-System übergeben wird, wird die Pfad-Kette (Path-Chain) nur geringfügig verändert. Die Verbindung wird auf der einen Seite des durch die Disconnect-Anforderung betroffenen Pfades unterbrochen, während die andere Seite des Pfades in der Pfadkette der path envelope verbleibt. Die an das Koordinierungssystem zurückgegebene path envelope enthält die neue Pfadkonfiguration (siehe FIG 9).

Das Koordinierungssystem wählt die geeignete Anforderung aufgrund seiner internen Daten aus. Beispielsweise benutzt das Koordinierungssystem eine Release-Anforderung zur Beendigung eines Calls. Im Falle von Rekonfigurationen, z.B. wenn ein Feature-Koordinierungsmodul die Kontrolle über einen aktiven Port anfordert, um eine Ansage bereitzustellen (siehe FIG 9 und FIG 10), ist es am sinnvollsten, eine Disconnect-Anforderung an das Switching-Control-System zu stellen, da der alte Verbindungszustand sicherlich wieder hergestellt werden wird, sobald die Ansage beendet ist.

Bei einer Disconnect-Anforderung muß das Koordinierungssystem zusätzlich den Unterbrechungspunkt angeben. Der Unterbrechungspunkt wird dabei so gewählt, daß er die bestehende Konfiguration möglichst wenig verändert. Aus diesem Grund wird der Unterbrechungspunkt möglichst immer auf diejenige Verbindungsseite gelegt, über deren aktiven Port das zugehörige Feature-Koordinierungsmodul die Kontrolle anfordert. Wenn z.B. ein Feature-Koordinierungsmodul der A-Verbindungsseite die Kontrolle über seinen entsprechenden A-Port anfordert, ist es wahrscheinlicher, daß die angeforderte Ressource ebenfalls auf der Teilnehmereinheit der A-Verbindungsseite verfügbar ist. Deshalb ist die erste Präferenz für die Zuweisung einer Ressource immer die eigene Teilnehmereinheit, während in zweiter Präferenz ein zuständiger zentraler Steuerungsprozessor GP herangezogen wird.

Ein Beispiel für eine verbleibende Pfad-Kette, die nach Ausführung einer Disconnect-Anforderung von der A-Verbindungsseite in der path envelope für das AS-Koordinierungsmodul abgespeichert wird, ist in FIG 9 dargestellt.

Für die Realisation der Disconnect-Funktion wird nur der angeforderte aktive Port über die Koordinierungsmodul-Kette des Koordinierungssystems weitergereicht (d.h. unter den Koordinierungsmoduln des Koordinierungssystems werden keine solche Daten weitergereicht, die sich auf die zugeordnete Pfadkette beziehen). Daraus ergibt sich eine einfache Lösung für die Behandlung der path envelope innerhalb des Koordinierungssystems. Gemäß dieser Lösung wird immer genau eine path envelope einem Koordinierungsmodul fest zugeordnet. Die path envelope enthält Pfadsegmente, die der Verbindung durch das Switching-Control-System in Antwort auf eine Verbindungsanforderung zugeordnet wurden.

Um in der Luft hängende Ressourcen (Pfadressourcen ohne Zuordnung zu einem aktiven Port) zu vermeiden, müssen Pfadsegmente immer mit wenigstens einem aktiven Port verknüpft sein. Deshalb muß jedes Mal, wenn ein Koordinierungsmodul die Kontrolle über einen aktiven Port freigibt, dieses Koordinierungsmodul dafür sorgen, daß alle mit diesem Port verknüpften Pfadelemente durch eine entsprechende Anforderung an das Switching-Control-System abgebaut werden. Wenn das Koordinierungssystem eine Disconnet-Anforderung bezüglich eines passiven Ports, d.h. eines Ports, der zu einer Ressource zugeordnet ist, abgibt, muß dafür gesorgt werden, daß die zugeordnete Ressource vom Switching-Control-System wieder freigegeben wird.

Da jedes Segment seine eigene private Sichtweise eines Calls besitzt, kann es vorkommen, daß mehrere Feature-Segmente zur gleichen Zeit das Anlegen von mehreren Tönen fordern. Hierbei können im wesentlichen zwei verschiedene Fälle auftreten, nämlich ein erster Fall, bei dem zwei Feature-Segmente Verbindungsanforderungen bezüglich desselben Ports stellen, und ein zweiter Fall, bei dem zwei Feature-Segmente Verbindungsanforderungen bezüglich unterschiedlicher Ports an das Koordinierungssystem stellen.

Im ersten Fall setzt sich immer dasjenige Feature-Segment durch, das dem betrachteten Port am nächsten liegt. Das bedeutet, daß der durch dieses Feature-Segment angeforderte Ton als erster physikalisch angelegt wird. Das andere Feature-Segment muß solange warten, bis das priorisierte Feature-Segment die Kontrolle über den Port freigibt. Sobald das priorisierte Feature-Segment die Kontrolle freigibt, kann das andere Feature-Segment seine private Sichtweise des Calls realisieren.

Im zweiten Fall, bei dem zwei Feature-Segmente Töne an verschiedene Ports anlegen wollen, tritt keine Konkurrenzsituation auf. Diese Töne können daher zu derselben Zeit physikalisch angelegt bzw. durchgeschaltet werden. Dies ist sogar bei Tönen möglich, die zu entfernten Ports durchgeschaltet werden müssen, da beide Verbindungsrichtungen unabhängig voneinander durchgeschaltet werden.

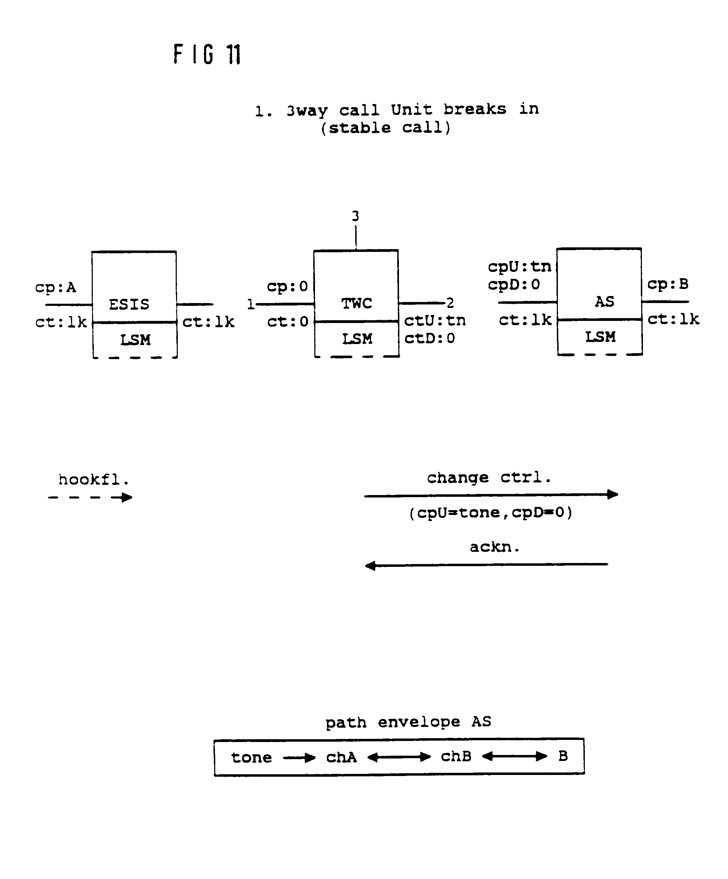

Anhand der Figuren 11, 12, 13, 14 und 15 wird im folgenden ein komplexeres Beispiel eines Calls, nämlich ein DreiWege-Call näher erläutert.

FIG 11 zeigt einen bestehenden stabilen Call, bei dem die A-Verbindungsseite einen Drei Wege-Call initiiert. In diesem Fall wird ein Ton zur B-Seite angelegt und die Kontrolle über die A-Seite zu einem Drei Wege-Segment TWC weitergereicht.

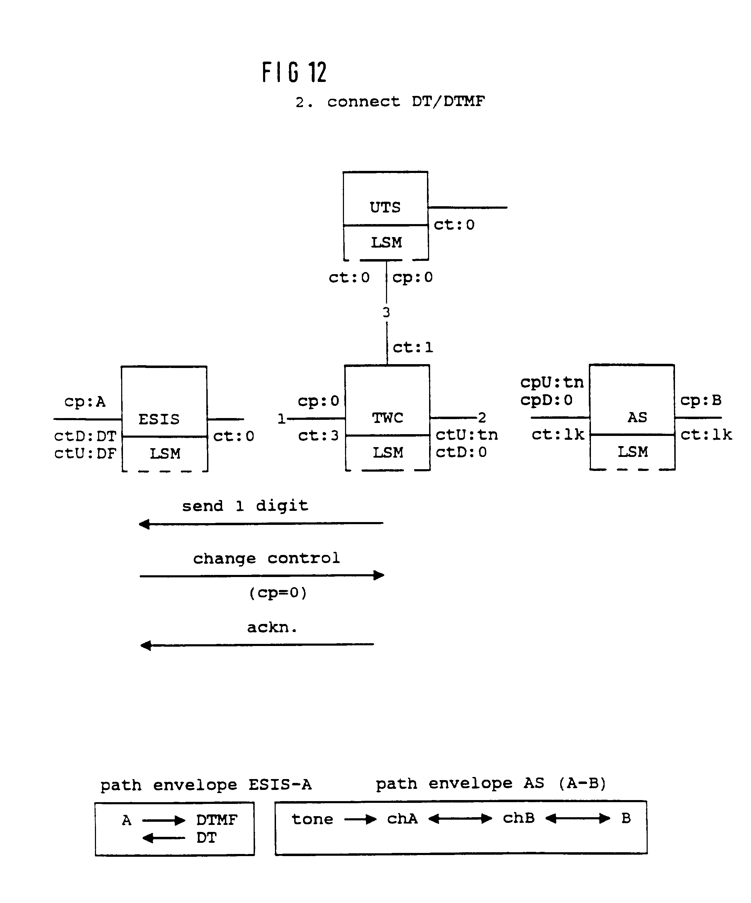

Um das Wählen einer neuen Nummer von der A-Seite zu ermöglichen, wird ein Wählton DT und ein entsprechender Wähltonempfänger durch das ESIS-Segment zum Port der A-Seite durchgeschaltet. Zu diesem Zweck ist die Kontrolle über den Port der A-Seite dem ESIS-Koordinierungsmodul übergeben worden. Diese Situation entspricht der Darstellung in FIG 12, bei der zwei Töne, nämlich ein Halteton zur B-Seite und ein Wählton zur A-Seite physikalisch durchgeschaltet sind.

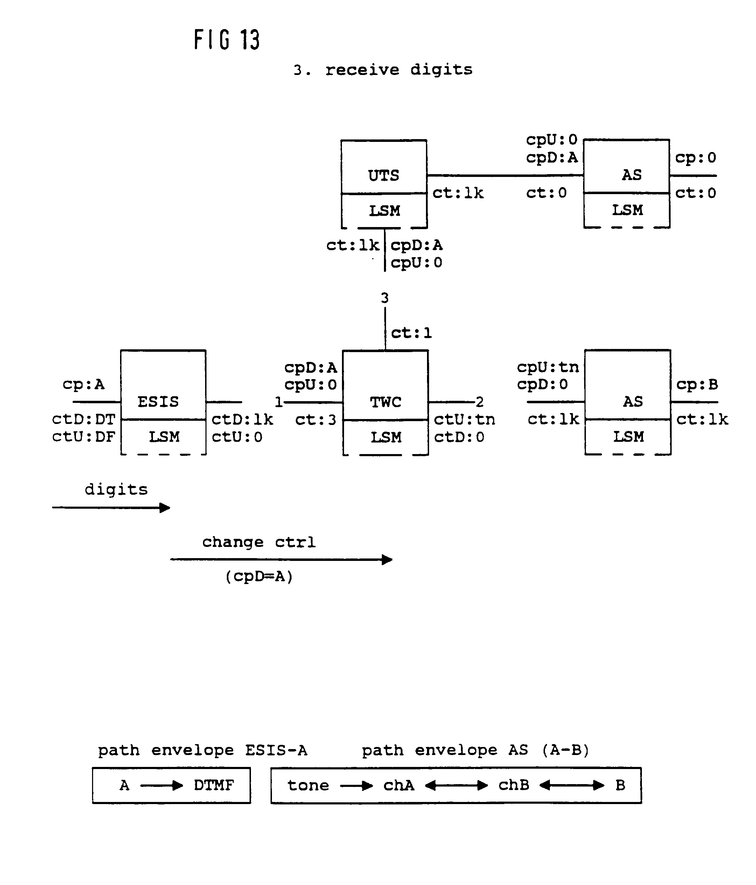

Sobald die erste Ziffer empfangen wird, kann der Wählton abgeschaltet werden. Das ESIS-Koordinierungsmodul gibt damit die Kontrolle über den Port A in rückwärtiger Richtung frei. Die Kontrolle über den Port A (Rückwärts-Richtung) wird an das AS-Koordinierungsmodul der Verbindung "A-C" weitergereicht, da die Weichenstellung des TWC-Koordinierungsmoduls auf die Verbindung "A-C" eingestellt ist. FIG 13 zeigt die Situation nach Austausch aller entsprechender Nachrichten des Koordinierungssystems.

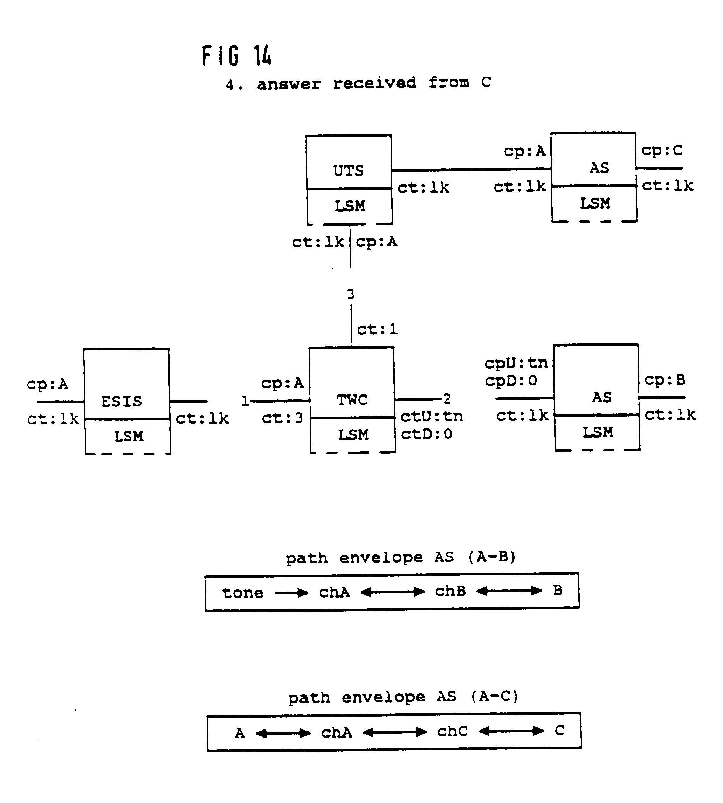

FIG 14 zeigt die zwischen der A-Seite und der C-Seite aufgebaute Verbindung. Zu diesem Zeitpunkt liegt die Kontrolle über die Ports A und C im AS-Koordinierungsmodul der Verbindung "A-C".

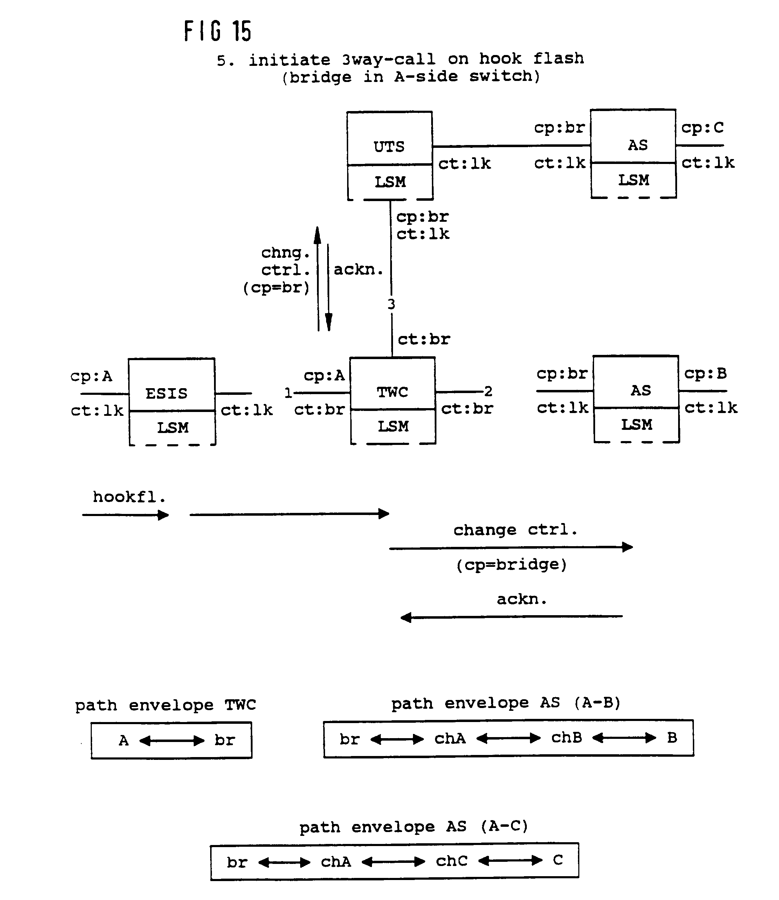

FIG 15 zeigt den Endzustand des Drei Wege-Calls, bei dem alle beteiligten Verbindungsseiten mit einer Brücke verbunden sind. Während die Verbindungsanforderungen der initiierenden Verbindungsseite (A-Seite) durch das TWC-Koordinierungsmodul an das Switching-Control-Sysstem PSS weitergegeben werden, werden die Verbindungsanforderungen für die anderen Verbindungsseiten (B-Seite und C-Seite) durch die entsprechenden AS-Koordinierungsmoduln an das Switching-Control-System weitergeleitet. Dieser Umstand ist in FIG 15 durch die verschiedenen Path Envelopes skizziert, die dem jeweiligen Koordinierungsmodul vom Switching-Control-System zurückgegeben werden. Bei dem Beispiel in FIG 15 ist angenommen, daß die Brücke auf der Teilnehmeranschlußeinheit SLU_{A} der A-Seite verfügbar ist.

Die Kontrolle über Port A liegt im Endzustand des DreiWege-Calls im TWC-Koordinierungsmodul. Die Kontrolle über die Ports B und C liegt in den jeweiligen AS-Koordinierungsmoduln.

## Patentansprüche

1. Koordinierungssystem zur Koordinierung von Verbindungsanforderungen eines modularen Connectionsystems an ein Switching-Control-System (PSS), wobei das Connectionsystem der Steuerung von Verbindungen auf logischer Ebene dient und das Switching-Control-System (PSS) der Steuerung von Verbindungen auf physikalischer Ebene dient, und wobei das Koordinierungssystem Koordinierungsmodule (LSM) umfaßt, die derart ausgestaltet sind, daß sie
a) vom Connectionsystem für einen an der Verbindung beteiligten aktiven Verbindungsendpunkt (VEP) erzeugte Verbindungsanforderungen empfangen und zwischenspeichern,
b) eine von ihnen zwischengespeicherte Verbindungsanforderung an das Switching-Control-System (PSS) weitergeben,
wenn sie die Kontrolle über einen aktiven Verbindungsendpunkt erhalten haben,
c) die Kontrolle über einen bestimmten aktiven Verbindungsendpunkt untereinander in der Weise vergeben, daß zu einem bestimmten Zeitpunkt immer nur ein Koordinierungsmodul die Kontrolle über diesen aktiven Verbindungsendpunkt besitzt.

2. Koordinierungssystem nach Anspruch 1,
**gekennzeichnet durch**,
einen Kontrollvergabemechanismus zwischen den Koordinierungsmodulen (LSM), der derart ausgestaltet ist, daß
a) ein Koordinierungsmodul (LSM) mit geringerer Priorität warten muß, bis ihm die Kontrolle von einem Koordinierungsmodul höherer Priorität übergeben wird, während
b) ein Koordinierungsmodul mit höherer Priorität die Kontrolle von einem Koordinierungsmodul geringerer Priorität anfordern kann.

3. Koordinierungssystem nach Anspruch 1 oder 2,
**gekennzeichnet durch**
a) Koordinierungsmodule (LSM) eines ersten Typs, die derart ausgestaltet sind, daß sie die Kontrolle über jeweils einen aktiven Verbindungsendpunkt einer Verbindung erlangen können,
b) Koordinierungsmodule eines zweiten Typs, die derart ausgestaltet sind, daß sie die Kontrolle über jeweils zwei aktive Verbindungsendpunkte einer Verbindung erlangen können, wobei in der Koordinierungsmodul-Kette einer Verbindung pro Verbindungsendpunktpaar jeweils nur ein Koordinierungsmodul des zweiten Typs vorhanden ist,
c) eine Prioritätsregelung, nach der ein Koordinierungsmodul bezüglich der Kontrolle eines Verbindungsendpunktes eine umso höhere Priorität besitzt, je näher es am Endpunkt der Koordinierungsmodul-Kette liegt.

4. Koordinierungssystem gemäß Anspruch 2 oder 3,
**dadurch gekennzeichnet,**
daß ein Koordinierungsmodul (LSM) derart ausgestaltet ist, daß es eine Verbindungsanforderung für einen Verbindungsendpunkt, über den es grundsätzlich keine Kontrolle erlangen kann, an ein anderes Koordinierungsmodul weiterreichen kann, das die Kontrolle über diesen Verbindungsendpunkt erlangen kann.

5. Koordinierungssystem nach einem der Ansprüche 1 bis 4,
**dadurch gekennzeichnet,**
a) daß jedem Modul des Connectionsystems genau ein Koordinierungsmodul (LSM) fest zugeordnet ist,
b) daß die Kommunikation der Koordinierungsmodule über die Kommunikationskanäle der Module des Connectionsystems erfolgt.

6. Koordinierungssystem nach einem der Ansprüche 1 bis 5,
**dadurch gekennzeichnet**,
daß ein Koordinierungsmodul (LSM) derart ausgestaltet ist,
daß die Übergabe einer Verbindungsanforderung an ein Koordinierungsmodul einem Prozeduraufruf entspricht.

7. Koordinierungssystem gemäß einem der Ansprüche 1 bis 6,
**dadurch gekennzeichnet,**
daß die Koordinierungsmodule (LSM) derart ausgestaltet sind,
daß sie die an sie übergebenen Verbindungsanforderungen jeweils in einen für das Switching Control-System (PSS) verständlichen Verbindungsauftrag übersetzen.

## Claims

1. Coordination system for coordinating connection requests of a modular connection system to a switching control system (PSS), the connection system being used for controlling connections at the logic level, and the switching control system (PSS) being used to control connections at the physical level, and the coordination system comprising coordination modules (LSM) which are designed in such a manner that they
a) receive from the connection system and buffer-store connection requests produced for an active connection end point (VEP) involved with the connection,
b) pass on a connection request, which is buffer-stored by them, to the switching control system (PSS) when they have received control over an active connection end point,
c) surrender control over a specific active connection end point to one another in such a manner that only one coordination module ever has control over this active connection end point at a specific point in time.

2. Coordination system according to Claim 1, characterized by a control surrendering mechanism between the coordination modules (LSM), which is designed in such a manner that
a) a coordination module (LSM) having a lower priority must wait until control has been passed to it by a coordination module of higher priority, while
b) a coordination module having higher priority can request control from a coordination module of lower priority.

3. Coordination system according to Claim 1 or 2, characterized by
a) coordination modules (LSM) of a first type which are designed in such a manner that they can achieve control over in each case one active connection end point of a connection,
b) coordination modules of a second type which are designed in such a manner that they can achieve control over in each case two active connection end points of a connection, there being in each case only one coordination module of the second type per. connection end point pair in the coordination module chain of a connection,
c) priority control in accordance with which a coordination module has higher priority with respect to the control of a connection end point the closer it is to the end point of the coordination module chain.

4. Coordination system according to Claim 2 or 3, characterized in that a coordination module (LSM) is designed in such a manner that it can pass on a connection request for a connection end point over which, in principle, it cannot achieve control, to another coordination module which can achieve control over this connection end point.

5. Coordination system according to one of Claims 1 to 4,
characterized in that
a) one and only one coordination module (LSM) is permanently assigned to each module of the connection system,
b) the communication of the coordination modules takes place via the communications channels of the modules of the connection system.

6. Coordination system according to one of Claims 1 to 5,
characterized in that
a coordination module (LSM) is designed in such a manner that the transfer of a connection request to a coordination module conforms with a procedure call.

7. Coordination system according to one of Claims 1 to 6,
characterized in that the coordination modules (LSM) are designed in such a manner that they translate the connection requests passed to them in each case into a connection command which is comprehensible for the switching control system (PSS).

## Revendications

1. Système de coordination de demandes de communication d'un système modulaire de connexion faites à un système (PSS) de commande de commutation, le système de connexion servant à la commande de communications sur le plan logique et le système (PSS) de commande de commutation servant à la commande de communications sur le plan physique, le système de coordination comprenant des modules (LSM) de coordination, qui sont tels qu'ils
a) reçoivent et mémorisent temporairement des demandes de communication produites par le système de connexion pour un point (VEP) d'extrémité de communication actif et participant à la communication,
b) retransmettent au système (PSS) de commande de commutation une demande de communication mémorisée temporairement par eux, lorsqu'ils ont reçu la vérification d'un point actif d'extrémité de la communication,
c) se donnent l'un l'autre la vérification d'un certain point actif d'extrémité de la communication, de telle sorte qu'à un instant déterminé, il n'y ait toujours qu'un module de coordination qui ait la vérification de ce point actif d'extrémité de la communication.

2. Système de coordination suivant la revendication 1,
caractérisé par
un mécanisme de transfert de vérification entre les modules (LSM) de coordination, qui est tel que
a) un module (LSM) de coordination de petite priorité doive attendre que lui soit transmise la vérification par un module de coordination de priorité plus grande, tandis
b) qu'un module de coordination de priorité grande peut demander la vérification par un module de coordination de priorité plus petite.

3. Système de coordination suivant la revendication 1 ou 2,
caractérisé par
a) des modules (LSM) de coordination d'un premier type, qui sont tels qu'ils peuvent obtenir la vérification d'un point actif d'extrémité d'une communication,
b) des modules de coordination d'un second type, qui sont tels qu'ils peuvent obtenir la vérification de deux points actifs d'extrémité d'une communication, un seul module de coordination du second type étant présent dans la chaîne de modules de coordination d'une communication par paire de points d'extrémité de communication,
c) une régulation de priorité, suivant laquelle un module de coordination a, pour la vérification d'un point d'extrémité de communication, une priorité d'autant plus grande qu'il est près du point d'extrémité de la chaîne de modules de coordination.

4. Système de coordination suivant la revendication 2 ou 3,
caractérisé en ce que
un module (LSM) de coordination est tel qu'il peut faire passer une demande de communication pour un point d'extrémité de communication, duquel il ne peut pas obtenir fondamentalement de vérification, à un autre module de coordination, qui peut obtenir la vérification de ce point d'extrémité de communication.

5. Système de coordination suivant l'une des revendications 1 à 4,
caractérisé en ce que
a) il est associé de manière fixe à chaque module du système de connexion exactement un module (LSM) de coordination,
b) la communication des modules de coordination s'effectue par l'intermédiaire des canaux de communication des modules du système de connexion.

6. Système de coordination suivant l'une des revendications 1 à 5,
caractérisé en ce que
un module (LSM) de coordination est tel que le transfert d'une demande de communication à un module de coordination corresponde à un appel de procédure.

7. Système de coordination suivant l'une des revendications 1 à 6,
caractérisé en ce que
les modules (LSM) de coordination sont tels, qu'ils traduisent chacune des demandes de communication, qui leur sont transférées, en une commande de communication pouvant être comprise par le système (PSS) de contrôle de commutation.
